Europäisches Patentamt

European Patent Office

Office européen des brevets

(19)

(11) **EP 0 565 399 B1**

(12)

# FASCICULE DE BREVET EUROPEEN

(45) Date de publication et mention
de la délivrance du brevet:
**15.01.1997 Bulletin 1997/03**

(51) Int Cl.⁶: **G05D 1/06**, G01S 13/94,
G01C 21/00

(21) Numéro de dépôt: **93400792.3**

(22) Date de dépôt: **26.03.1993**

(54) **Procédé et dispositif d'anti-collisions terrain pour aéronef**

Verfahren und Vorrichtung zur Grundkollisionsvermeidung für Flugzeuge

Method and device for collision avoidance of aircraft on the ground

(84) Etats contractants désignés:
**AT BE CH DE DK ES GB GR IE IT LI LU MC NL PT SE**

(30) Priorité: **07.04.1992 FR 9204245**

(43) Date de publication de la demande:
**13.10.1993 Bulletin 1993/41**

(73) Titulaire: **DASSAULT ELECTRONIQUE**
**F-92214 Saint-Cloud (FR)**

(72) Inventeurs:
 • **Chazelle, Xavier**
 **F-92210 Saint-Cloud (FR)**
 • **Hunot, Anne-Marie**
 **F-75016 Paris (FR)**
 • **Lepere, Gérard**
 **F-93300 Aubervilliers (FR)**

(74) Mandataire: **Plaçais, Jean-Yves**
**Cabinet Netter,**
**40, rue Vignon**
**75009 Paris (FR)**

(56) Documents cités:
**WO-A-85/03566**      **WO-A-88/00734**
**FR-A- 2 607 948**

 • **1989 IEEE INTERNATIONAL CONFERENCE ON SYSTEMS,MAN,AND CYBERNETICS 14 Novembre 1989, CAMBRIDGE,MASSACHUSETTS pages 532 - 537 , XP000129832 GORDER ET AL 'obstacle detection and avoidance maneuver selection for automatically guidedrotorcraft nap-of-the-earth flight following planned flight profile'**
 • **IEEE 1982 NATIONAL AEROSPACE AND ELECTRONICS CONFERENCE 18 Mai 1982, DAYTON CONVENTION CENTER pages 1366 - 1372 WENDL ET AL 'advanced automatic terrain following/terrain avoidance control concept study'**

## Description

L'invention concerne le domaine général des aides à la navigation aérienne.

Ces aides comprennent notamment les moyens qui permettent à l'aéronef de connaître sa position, et ceux qui visent à établir son altitude par rapport au sol.

La plupart des aéronefs sont maintenant équipés d'une centrale inertielle, qui leur permet de suivre leur position depuis le décollage. La centrale inertielle fournit les composantes des vecteurs vitesse et accélération de l'aéronef, ainsi que des angles associés. Il est possible d'en tirer des informations de position, mais avec une certaine dérive.

Les informations de position ainsi obtenues peuvent être rapprochées de celles que fournissent d'autres moyens de radionavigation. On utilise par exemple les mesures du système dit "Global Positioning System" ou GPS, avec un filtrage de Kalman. Ceci peut donner finalement des informations de position assez précises en latitude et longitude. La dérive est plus importante pour l'altitude.

Mesurer l'altitude de l'aéronef est en effet plus délicat. L'altitude par rapport au niveau de la mer est connue à l'aide de moyens de mesure dits "baro-inertiels"; mais ils sont tributaires d'un recalage périodique.

A côté de cela, un radio-altimètre donne la hauteur de l'aéronef par rapport au sol, ou "hauteur radio-sonde"; mais il s'agit d'une valeur locale instantanée: ses caractéristiques dépendent de l'assiette de l'aéronef, car celle-ci influe sur la manière dont le faisceau radio-sonde éclaire le sol. En outre, on ne sait pas en prédire l'évolution future.

Ces mesures sont suffisantes pendant la phase de croisière du vol, si du moins l'on est certain que l'aéronef évolue en haute altitude.

En tout état de cause, un problème se pose lors de l'approche préalable à l'atterrissage, ainsi qu'après le décollage: dans ces deux cas, l'aéronef est nécessairement près du sol, ce qui implique un risque aggravé d'une collision avec celui-ci.

Pour traiter ces difficultés particulières relatives à l'atterrissage et au décollage, plusieurs propositions ont été faites.

Certains dispositifs, comme par exemple celui décrit dans la publication WO-A-88 00 734 proposent une mémoire de masse dont la structure autorise le stockage de "données topographiques". Ce type de mémoire peut être utilisé (comme cela est le cas dans le dispositif décrit dans la publication US-A-4 675 823) pour déterminer la zone (large) ou se trouve l'aéronef, afin de "modifier des critères" d'une alarme fondée sur une altitude mesurée d'après la zone géographique dans laquelle l'aéronef se trouve.

D'autres dispositifs proposent de recourir à des systèmes d'avertissement de la proximité du sol ou "Ground Proximity Warning Systems", en abrégé GPWS (à ne pas confondre avec les systèmes de positionnement dits GPS).

Ces systèmes GPWS permettent certains progrès, mais ne sont pas entièrement satisfaisants, notamment dans les reliefs un tant soit peu tourmentés.

On connaît, par ailleurs, d'après le document US-A-4224669 un dispositif embarqué dans un aéronef, du type comprenant :

- une mémoire de masse pour stocker des données d'altitude-seuil adressables par deux coordonnées horizontales,
- des entrées pour recevoir des informations d'état représentatives de la position mesurée et du mouvement de l'aéronef,
- une mémoire de travail,
- des moyens de gestion de la mémoire de masse pour stocker dans la mémoire de travail l'altitude-seuil correspondant à la position présente de l'aéronef, et
- des moyens pour surveiller une condition choisie, portant sur la relation entre l'altitude mesurée et l'altitude-seuil de la mémoire de travail, afin d'établir une action telle qu'une alarme lorsque cette condition implique un passage sous une altitude de sécurité.

Dans ce dispositif, les données d'altitude mises en mémoire sont du type "minimum safe altitude" ou MSA. Or, l'homme du métier sait que ce type de données n'a qu'une relation lointaine avec le relief, puisque c'est l'altitude à laquelle on considère normalement que l'aéronef vole en sécurité.

En outre, aux basses altitudes, ce dispositif ne peut pas définir la hauteur au sol sous l'aéronef, sans faire appel à un altimètre radar. Par conséquent, ce type de dispositif anti-collision terrain ne peut pas fonctionner, de façon fiable, en toutes circonstances, y compris (et surtout) lors de phases d'approche à l'atterrissage et au décollage, et indépendamment du pilote.

La présente invention vient apporter une autre solution à ce problème, à partir d'une approche radicalement différente.

Le but général de l'invention est de permettre à l'aéronef d'éviter la collision avec le terrain survolé, en toute circonstance représentant un danger.

Plus précisément, l'invention vise à permettre d'assurer qu'à tout instant, l'aéronef n'est pas dans une situation immédiatement dangereuse par rapport au terrain. Elle vise également à vérifier que la trajectoire à court terme de l'aéronef ne le conduit pas à une situation dangereuse par rapport au terrain.

Un second but de l'invention est de fournir à cet effet un dispositif embarqué, insensible aux conditions météorologiques, susceptible de fonctionner en permanence, et indépendant, en fonctionnement, des systèmes d'informations, de contrôle et de sécurité implantés au sol.

Un troisième but de l'invention est de proposer au pilote une manoeuvre d'évitement, en cas de situation dangereuse, éventuellement d'automatiser une telle manoeuvre dans certains cas.

L'invention a aussi pour but de fournir au pilote une image synthétique du terrain en temps réel, à distance de visibilité.

L'invention a encore pour but d'améliorer l'ergonomie et la sécurité du pilotage d'un aéronef.

Un autre but important de l'invention est de permettre une mise à jour régulière ou recalage d'un fichier terrain (ou base de données de terrain), à partir des informations relevées par un ensemble d'aéronefs équipés selon l'invention.

L'invention propose à cet effet un dispositif du type décrit en introduction, dans lequel :

- d'une première part, la mémoire de masse est organisée en base de données altimétrique, couvrant une partie substantielle de la surface terrestre, avec une indexation permettant l'accès rapide à des jeux de mailles contiguës que contient ladite base de données, en fonction des deux coordonnées horizontales, selon au moins un niveau de résolution,
- d'une seconde part, pour chaque maille, l'altitude-seuil est une représentation directe de l'altitude maximale du sol à l'intérieur de cette maille,
- d'une troisième part, la mémoire de travail est une mémoire rapide, de taille propre à recevoir une carte locale temporaire, définissant une enveloppe en altitude dans la zone où évolue l'aéronef, et
- d'une quatrième part, on prévoit en outre :

 * des moyens de traitement des informations d'état, pour définir des altitudes prédites, en correspondance de positions prédites de l'aéronef, et
 * des moyens de traitement anti-collision pour :

   . définir un domaine de protection autour de l'aéronef, en correspondance d'une suite de positions prédites de l'aéronef, et
   . comparer ce domaine de protection à l'enveloppe d'altitude dans la partie correspondante de ladite carte locale,

une alarme étant établie si la relation entre le domaine de protection et l'enveloppe en altitude, satisfait une condition anti-collision, impliquant un franchissement vers le bas d'une marge de sécurité en altitude.

Avantageusement, le maillage comprend des mailles de base dont certaines sont subdivisées par au moins un niveau de maillage de résolution plus fine, en particulier au voisinage des aéroports.

Les informations d'état sont des données exprimées, par exemple, en coordonnées géographiques comme la latitude, la longitude et l'altitude, et elles comprennent également le vecteur vitesse de l'aéronef, avec éventuellement des angles associés.

Selon l'invention proposée, ces indications d'état proviennent d'au moins un capteur choisi dans le groupe comprenant: au moins une centrale inertielle de bord, un instrument de radionavigation, en particulier fondé sur satellite, un radio-altimètre, un baro-altimètre, un système d'atterrissage aux instruments.

Avantageusement, les entrées reçoivent également des indications de commande provenant du poste de pilotage, comme par exemple, le mode de pilotage (manuel ou automatique), le type de trajectoire suivie par l'aéronef (virage ou ligne droite), ou les caractéristiques de vol de l'aéronef.

De préférence, la condition anti-collision est définie au moins en partie à l'aide d'une marge de sécurité en altitude et/ou des indications de commande provenant du poste de pilotage.

Cette loi d'anti-collision exprime le fait que la distance verticale entre le domaine de protection et l'enveloppe en altitude demeure au moins égale à la marge de sécurité d'altitude, pour les points prédits de la trajectoire de l'aéronef. Des conditions plus élaborées peuvent être prévues.

Selon un autre aspect de l'invention, les moyens de traitement sont également agencés pour émettre une pré-alarme indiquant un danger de collision avec le sol à moyen terme, en fonction d'au moins une seconde loi d'anti-collision de terrain, propre à l'aéronef. Cette loi peut tenir compte du fait que l'aéronef vole en ligne droite ou est en virage.

De préférence, les moyens de gestion de la base de données utilisent un changement de repère dans les zones entourant les pôles terrestres. Également, ils associent aux mailles une dimension dépendant de la latitude dans la direction des parallèles terrestres.

Très avantageusement, d'une part, la mémoire de masse est structurée en blocs, chaque bloc étant associé à une donnée d'altitude de référence exprimée en valeur absolue, tandis que l'altitude maximale dans chaque maille du bloc est exprimée en valeur relative, par rapport à une maille voisine, conformément à une loi prédéterminée de parcours des mailles à l'intérieur d'un bloc, et d'autre part, les moyens de gestion de la mémoire de masse sont agencés pour convertir les altitudes relatives en altitudes absolues, lors de leur chargement en mémoire de travail.

De préférence, chaque bloc possède un recouvrement d'au moins une maille de base sur deux côtés adjacents avec ses voisins.

Selon un autre aspect de l'invention, le dispositif comporte des moyens pour afficher une image synthétique du terrain, en fonction du contenu de la mémoire locale.

Il sera maintenant traité d'un aspect particulièrement avantageux de l'invention. En vol, le dispositif comporte des moyens pour comparer le terrain défini par la mémoire locale au terrain défini par les instruments de bord. Le résultat de cette comparaison peut être affiché et/ou servir à valider le fonctionnement du dispositif. De plus, des moyens sont prévus pour mémoriser des différences relevées lors de ladite comparaison. Après recoupements convenables, ces différences mémorisées vont servir à mettre à jour le fichier terrain de base, entretenu au sol.

Selon encore un autre aspect de l'invention, le dispositif proposé est susceptible d'un fonctionnement au moins partiellement modifié au voisinage du sol, en particulier en phase d'atterrissage aux instruments.

L'invention peut également être présentée sous la forme d'un procédé d'aide à la navigation pour aéronef. Ce procédé est susceptible des mêmes variantes que le dispositif décrit plus haut.

D'autres caractéristiques et avantages de l'invention apparaîtront à l'examen de la description détaillée ci-après, et des dessins annexés, sur lesquels :

- la figure 1 est un schéma de principe très général d'un dispositif selon l'invention;

- la figure 2 est un schéma de principe plus détaillé d'un dispositif selon l'invention;

- la figure 3 est un schéma de principe encore plus détaillé, mais partiel, d'un dispositif selon l'invention;

- les figures 4A et 4B sont deux autres schémas détaillés, qui, réunis (compte-tenu de leur recoupement), définissent un dispositif selon l'invention;

- la figure 5 illustre la définition des mailles selon l'invention;

- la figure 6 est une vue en perspective montrant la relation entre deux mailles consécutives;

- la figure 7 montre un regroupement des mailles en pavés;

- les figures 8 et 9 montrent un recouvrement des pavés;

- les figures 10a, 10b et 10c montrent différents modes de calcul d'une altitude absolue à partir d'informations mise en mémoire pour les pavés;

- les figures 11 et 12 illustrent le principe d'un mode de vérification de l'altitude mise en mémoire;

- la figure 13 illustre un domaine d'incertitude;

- la figure 14 illustre l'incertitude liée à la trajectoire d'aéronef;

- les figures 15A et 15B illustrent respectivement une trajectoire prédite et un profil d'altitude assorti d'une marge, qui lui correspond;

- la figure 16 schématise l'évolution de la position d'un aéronef par rapport à une carte contenue dans une mémoire locale;

- les figures 17a et 17b illustrent la détermination de la relation entre la position de l'aéronef et le contenu de la mémoire locale;

- la figure 18 illustre un exemple de courbe de protection anti-collision;

- les figures 19 et 20 sont des vues en coupe verticale illustrant différentes situations d'un aéronef vis-à-vis d'un obstacle;

- la figure 21 est un exemple de trajectoire d'évitement;

- les figures 22a et 22b illustrent deux courbes de terrain;

- les figures 23a et 23b illustrent deux signaux d'écart relatifs aux courbes de terrain des figures 22a et 22b;

- la figure 24 illustre un mécanisme d'analyse de ces signaux d'écart.

Les dessins annexés sont pour l'essentiel de caractère certain, et font donc partie intégrante de la présente description. Ils pourront non seulement servir à mieux faire comprendre celle-ci, mais aussi contribuer à la définition de l'invention, le cas échéant.

D'une façon générale, dans la présente description, l'expression "poste de commande" (ou "de pilotage") se réfère aux fonctions nécessaires pour le pilotage, que celles-ci soient effectuées manuellement ou de manière automatique. Par fonctions nécessaires au pilotage, on entend notamment les fonctions de pilotage proprement dites, et les fonctions de navigation. Sur un autre plan, on pourra distinguer les fonctions elles-mêmes, et leur interface homme/machine.

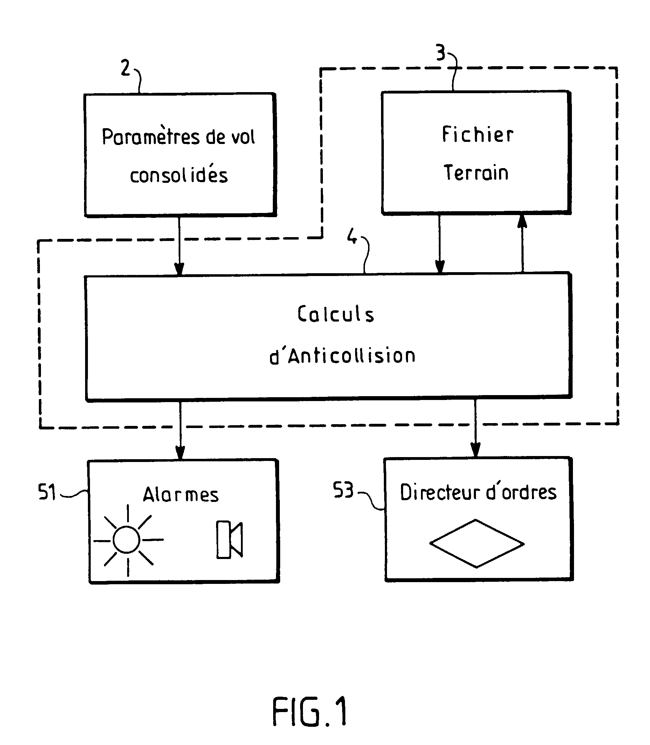

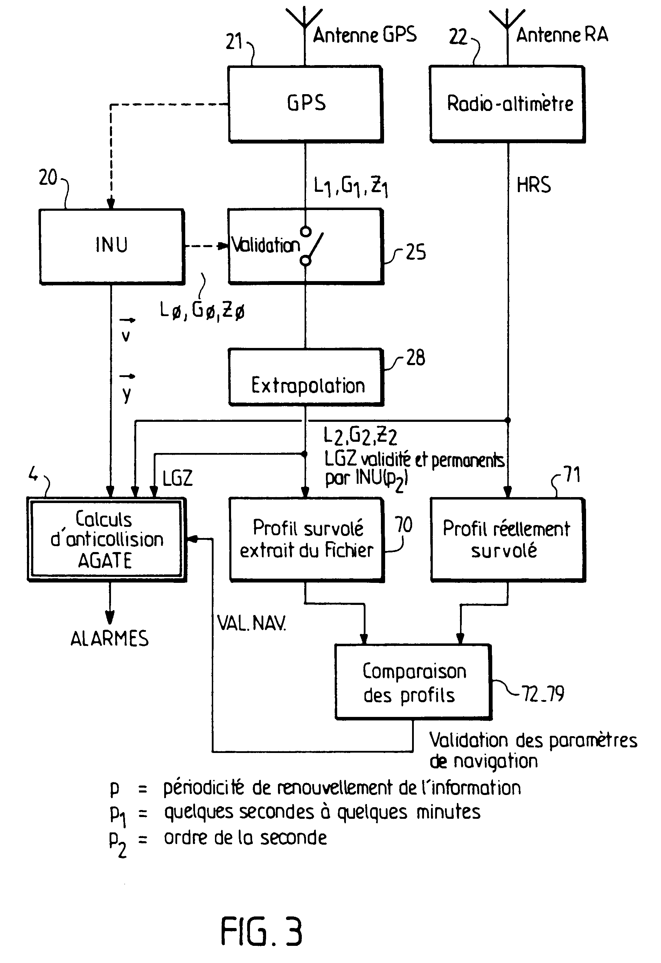

Il est fait référence aux figures 1 à 4B. Le dispositif selon l'invention est essentiellement destiné à être installé à bord d'un aéronef. Celui-ci comporte des équipements 2 capables de fournir sous forme de signaux électriques des indications de paramètres du vol, à savoir (figure 3):

- une centrale inertielle 20 ou INU (matériel "certifié"),
- un instrument de radionavigation du genre GPS, noté 21, avec son antenne (matériel "non certifié"),
- un radio-altimètre 22, avec son antenne.

La centrale inertielle 20 fournit les composantes des vecteurs vitesse (V) et accélération (GAMMA) de l'aéronef. On peut en déduire les angles caractéristiques associés: incidence, dérapage, pente, tangage, cap, gîte, notamment. Cependant, dans la mesure où la centrale inertielle mesure et/ou utilise certains de ces angles pour déterminer les vecteurs vitesse et accélération, il est préférable de recueillir directement les valeurs de la centrale inertielle pour lesdits angles, là où l'on s'en sert pour la mise en oeuvre de l'invention. Ces valeurs angulaires peuvent être affichées et/ou utilisées au niveau du poste de commande.

Pour l'altitude, la centrale inertielle coopère avec un altimètre barométrique (non représenté), de manière connue. On définira les notations ci-après :

- $Z_b$ est l'altitude barométrique donnée par la mesure de la pression atmosphérique, et varie selon l'altitude et les conditions météorologiques,
- $Z_i$ est l'altitude inertielle calculée par la double intégration de l'accélération verticale mesurée par les accéléromètres de la centrale à inertie (variations à long terme),
- $Z_{bi}$ est l'altitude baro-inertielle, c'est-à-dire $Z_b$ filtré par $Z_i$ (boucle du 3ème ordre, par exemple),
- $Z_c$ sera l'altitude calculée (HRS + $Z_{ta}$), où HRS est la hauteur radio-sonde donnée par le ou les radio-altimètres de l'aéronef (précision de quelques mètres), et $Z_{ta}$ sera l'altitude du terrain sous l'avion donnée par le fichier terrain (défini plus loin)
- $Z_{gps}$ est l'altitude fournie par le GPS.

La plupart du temps, les aéronefs sont équipés d'une batterie de centrales inertielles, et d'une logique de décision tenant compte de l'ensemble des indications de ces centrales. Pour la mise en oeuvre de l'invention, la Demanderesse estime actuellement préférable de prendre les informations d'une seule des centrales (dans la mesure où elles sont confirmées).

L'instrument de radionavigation 21 fournit des mesures brutes de latitude L1, longitude G1, et altitude Z1 (=$Z_{gps}$), rafraîchies à une cadence p1 de quelques secondes à quelques minutes. Par intégration sur les vecteurs vitesse et accélération, la centrale inertielle 20 fournit d'autres mesures de latitude L0, longitude G0, et altitude Z0 (=$Z_{bi}$), moins précises mais issues d'un matériel "certifié". Un bloc 25 compare les deux types de mesure, et valide les grandeurs L1,G1,Z1, si elles sont cohérentes avec L0, G0, Z0. De telles techniques de validation sont connues. Les mesures L2,G2,Z2 validées sont disponibles à la cadence p1. Mais elles sont affinées à partir de la centrale inertielle à une cadence p2 d'environ une seconde.

Un bloc 28 extrapole les informations entre le dernier instant de mesure par l'instrument 21 et l'instant actuel (cette extrapolation est utile notamment en cas de problème de cadence de fourniture des informations qui peut être trop faible).

Le radio-altimètre 22 délivre la hauteur au dessus du sol, notée HRS.

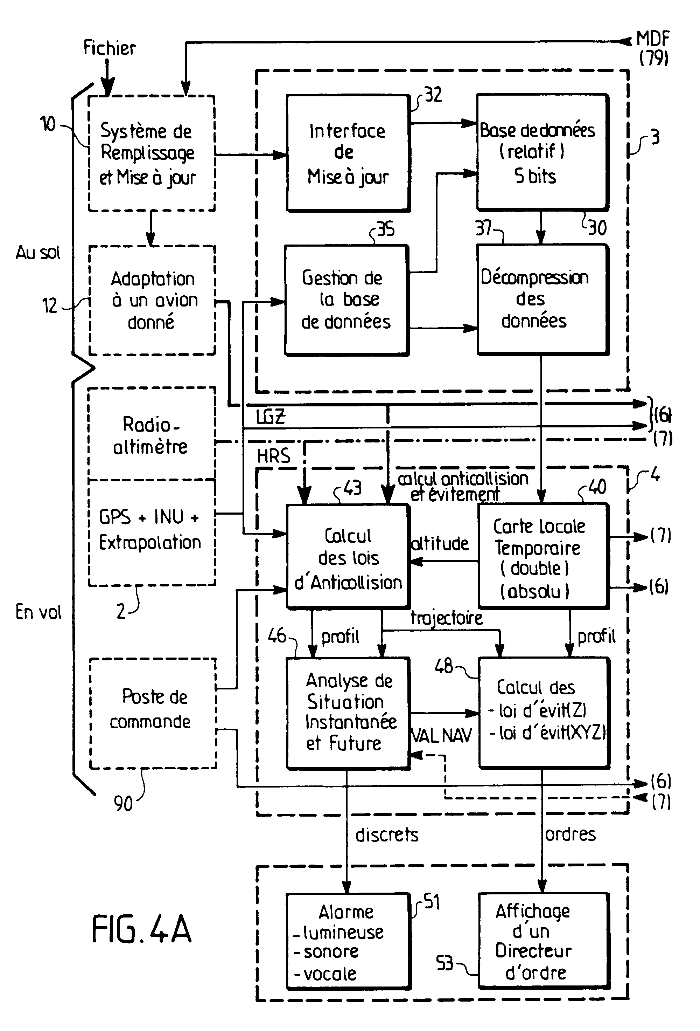

Un bloc 3 contient un fichier terrain, établi d'une façon que l'on décrira ci-après. En fonction des grandeurs L et G, on accède à une partie de ce fichier, dite carte locale, et stockée dans une mémoire locale 40 (Figure 4A).

A partir de cette carte locale, et des grandeurs L, G, Z ainsi que HRS, le bloc 4 effectue des calculs d'anti-collision, de préférence accompagnés de calculs d'évitement de terrain.

En présence d'un risque de collision, une alarme (51) est émise. Un directeur d'ordres 53 peut suggérer une manoeuvre d'évitement. Ceci est à destination du poste de commande.

La carte locale peut être également utilisée pour la génération d'une image synthétique (60), avec son dispositif de visualisation 55.

Elle va encore servir à des fonctions (7) de validation de la navigation et de mémorisation d'informations d'écart (ou de différences), notées MDF.

Ces écarts sont transférés au sol du bloc 79 au bloc 10, puis triés et servent à la mise à jour totale ou partielle de la base de données 30.

La mémoire 70 retient le profil survolé cartographié, selon la séquence des données L, G, Z. La mémoire 71 retient le profil réel survolé, tiré de la hauteur HRS. L'écart entre ces deux profils est calculé en 72.

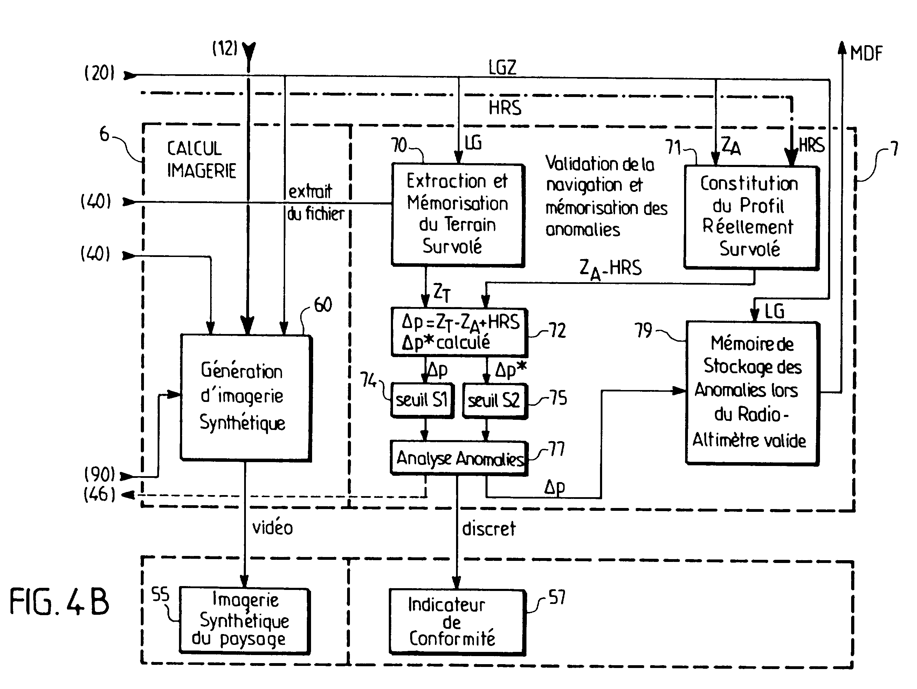

Plus précisément (figure 4B), l'écart est comparé à deux seuils en 74 et 75, respectivement. Il est ensuite analysé (77), d'où:

- l'actionnement d'un indicateur de conformité 57 confirmant le bon fonctionnement du dispositif;
- la production d'un signal VAL.NAV., pour valider les calculs du bloc 4; et
- selon d'autres critères, la mémorisation d'informations MDF dans une mémoire 79, en correspondance des valeurs L et G pour lesquelles ils se sont manifestés. Ces informations MDF peuvent alors servir de base, après le vol, pour la mise à jour effectuée dans le système 10 de la figure 4A.

En pratique, le bloc d'analyse 77 va faire une corrélation des deux entrées, mais en tenant compte :

- de l'historique (passé récent) du vol,
- de la confiance estimée en les données du radio-altimètre (limites de fonctionnement compte-tenu de l'assiette de l'avion, auto-contrôle),
- du caractère fugace du franchissement du seuil,
- de l'analyse du résultat (biais ou bruit ou autre),
- éventuellement d'informations mémorisées adéquates.

La présente invention nécessite une préparation au sol, effectuée à intervalles réguliers.

Les fonctions de traitement (3) du fichier terrain sont implantées à bord de l'aéronef. Elles utilisent une mémoire de masse 30 propre à loger une base de données terrain BDT. A cette mémoire de masse 30 sont associés une interface de mise à jour 32, un dispositif de gestion de la base de données 35, ainsi qu'un dispositif 37 pour la décompression des données de la base.

Au sol, extérieurement à l'aéronef, un dispositif informatique 10 assure le remplissage et la mise à jour de la base de données 30 à travers l'interface 32, à partir d'informations issues d'un fichier électronique de terrain très détaillé. De préférence, on prévoit également au sol un bloc 12 qui définit un paramétrage pour adapter l'exploitation du fichier de terrain à un avion donné, et transmet ensuite ces informations :

- au calculateur anti-collision 43, pour fixer les paramètres des lois d'anti-collision, et le cas échéant d'évitement, et
- au dispositif de visualisation 60 pour adapter la visualisation aux caractéristiques dynamiques de l'aéronef.

Le fichier de terrain au sol peut être régulièrement mis à jour à l'aide des informations de retour MDF, convenablement contrôlées. Les données de terrain incluses dans la base de données 30 étant comprimées, leur utilisation nécessite l'usage d'une fonction 37 de décompression que l'on décrira plus loin.

De son côté, le bloc 35 de gestion de la base de données fait usage d'au moins un index qui peut être stocké dans la mémoire de masse 30, de façon à permettre l'identification et l'accès rapide aux données contenues dans la base de données BDT.

Le poste de commande 90 fournit lui aussi des informations, qui comprennent au moins la définition d'une marge de sécurité d'altitude MCZ, transmise au bloc 43. On y ajoute de préférence un "mot d'état d'entrée" indiquant:

- si le pilotage est automatique ou manuel ;
- si l'avion est en virage ou en ligne droite ;

- les caractéristiques (notamment de vol) de l'aéronef.

En outre, le poste de commande 90 peut définir des réglages pour l'imagerie synthétique du bloc 60.

L'une des bases essentielles de la présente invention est le fait que la Demanderesse a perçu la possibilité de stocker à bord d'un aéronef un fichier de terrain susceptible de représenter la quasi-totalité du bloc terrestre, dans la limite de contour et de résolution qui convient pour les besoins d'un aéronef.

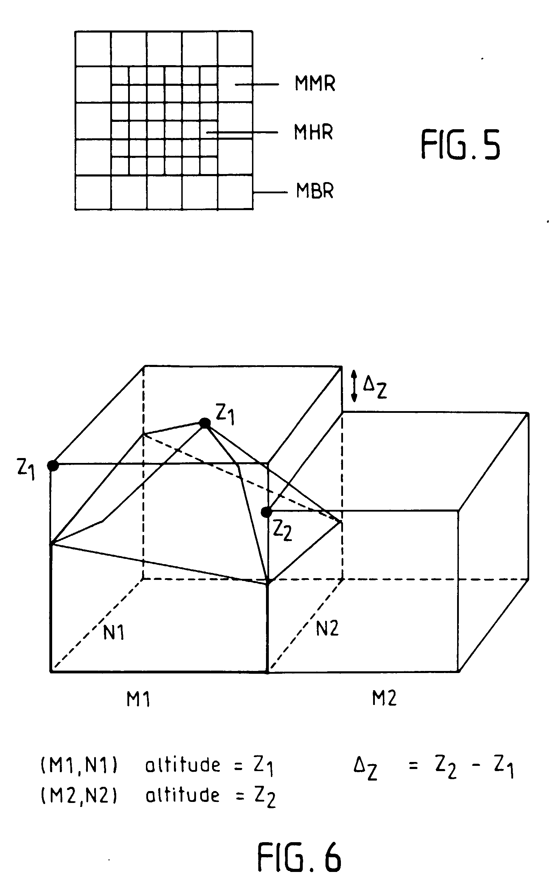

Tout d'abord (figure 5), les informations stockées sont définies dans des mailles élémentaires de basse résolution MBR, qui existent pour tout le domaine géographique couvert par la base de données.

Là où sont des aéroports, ou pour d'autres raisons, la maille MBR peut être décomposée en mailles de moyenne résolution MMR, décomposables à leur tour (par exemple au voisinage immédiat de l'aéroport) en mailles de haute résolution MHR.

La figure 6 montre qu'à chaque maille, quelle qu'en soit la résolution, on associe une valeur numérique, représentative de l'altitude du point le plus élevé situé à l'intérieur de la maille (il est rappelé que le fichier au sol est beaucoup plus détaillé).

Une autre caractéristique importante de l'invention réside dans le fait que ces valeurs d'altitude ne sont pas stockées sous forme absolue (compression).

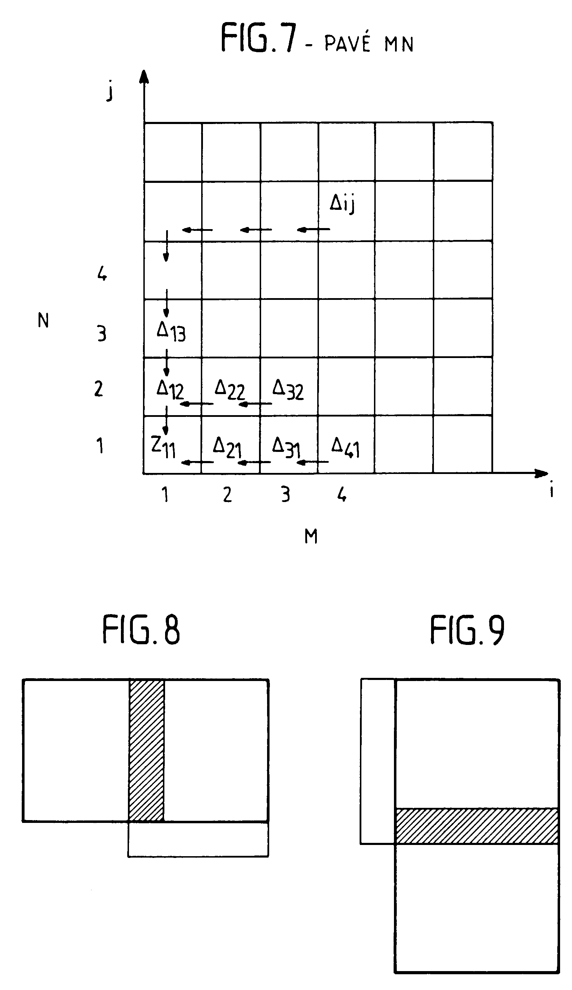

Pour expliquer cela, il est fait référence au figures 7 à 9 (Les mots "horizontal" et "vertical" se réfèrent ici au plan de la figure). L'élément essentiel pour la définition des grandeurs d'altitude est le "pavé" de la figure 7. Un pavé (identifié par les indices M et N) comprend un rectangle de ME x ME mailles élémentaires. ME est par exemple de l'ordre de 50. Le découpage en pavés est effectué de sorte que deux pavés consécutifs se recouvrent sur une colonne large d'une maille, verticalement (figure 8), et sur une ligne haute d'une maille, horizontalement (figure 9).

Selon l'invention (figure 7), seule l'altitude Z11 concernant la maille élémentaire située dans le coin inférieur gauche d'un pavé est stockée sous forme absolue, c'est-à-dire avec tous ses chiffres significatifs. Toutes les autres valeurs d'altitude à l'intérieur d'un pavé sont stockées de manière relative (DELTAij), c'est-à-dire:

- par rapport à la maille qui la précède directement sur la même ligne, si cette maille existe dans le pavé, ou
- par rapport à la maille immédiatement inférieure, si l'on se trouve sur la maille la plus à gauche d'une ligne.

On observera qu'il existe une redondance des informations, du fait du recouvrement des pavés.

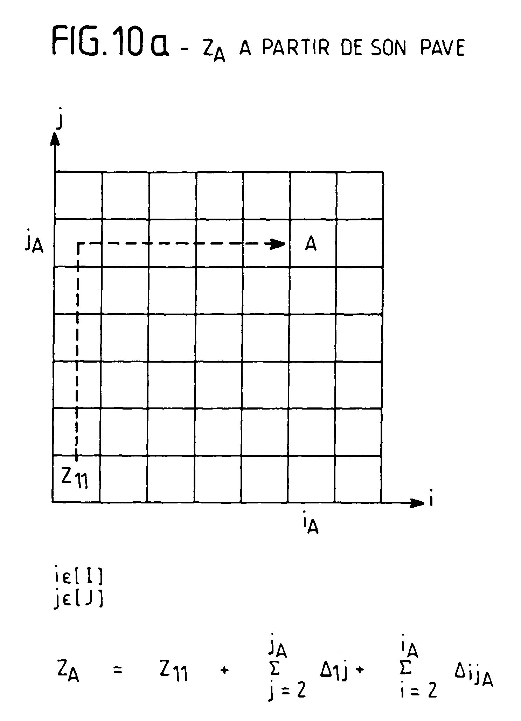

Ainsi, la figure 10a montre comment l'on détermine l'altitude $Z_A$ de la maille élémentaire $i_A$, $j_A$ dans un pavé, à l'aide de la formule (I) (voir l'Annexe Formules en fin de description).

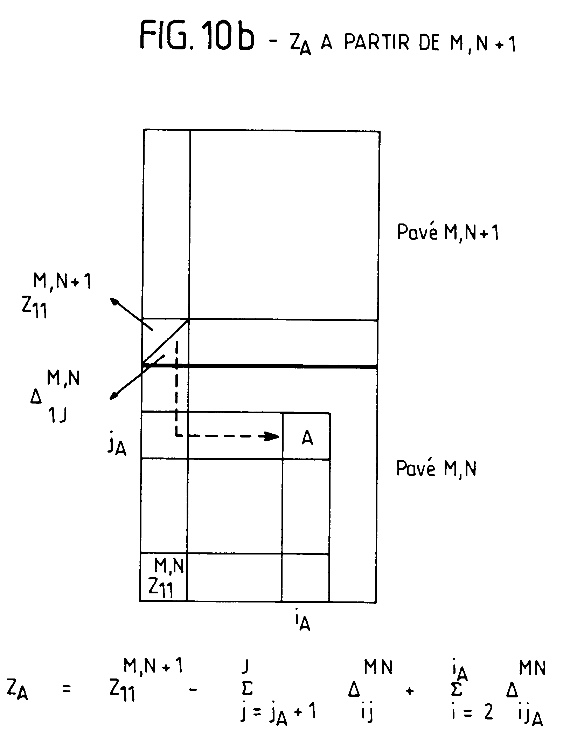

La figure 10b illustre comment on détermine l'altitude du même point à partir du pavé situé au-dessus, en liaison avec la formule (II).

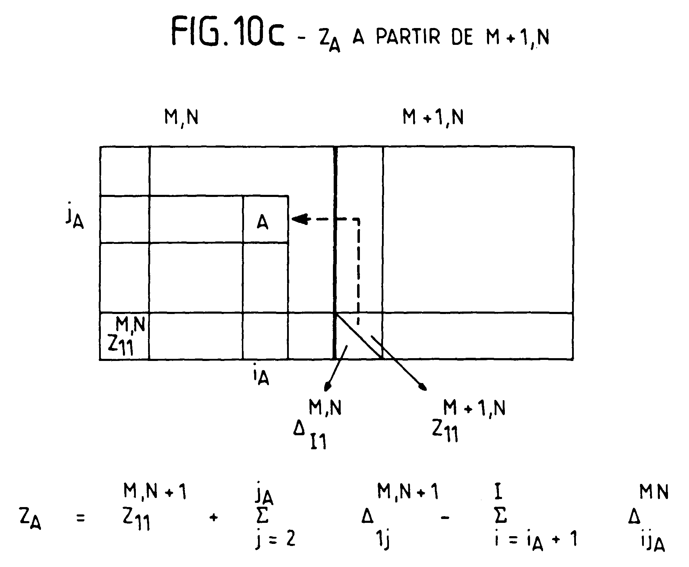

La figure 10c et la formule (III) montrent comment on détermine encore l'altitude du même point à partir du pavé situé à droite.

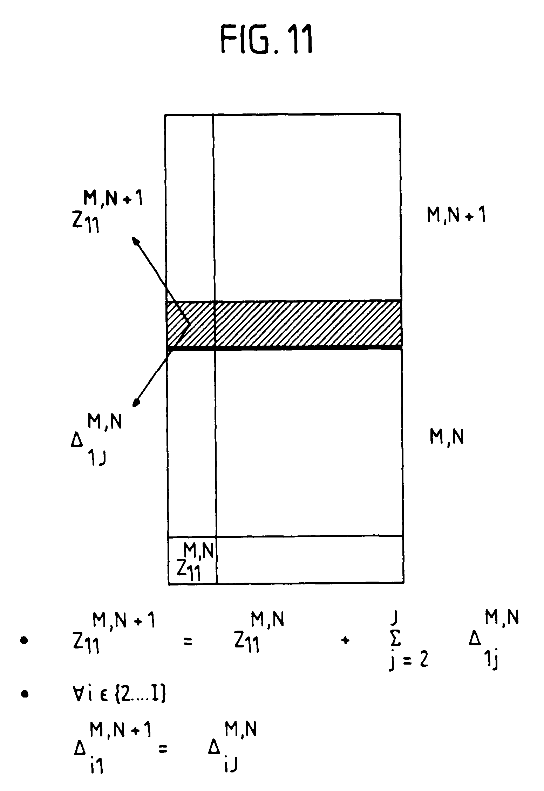

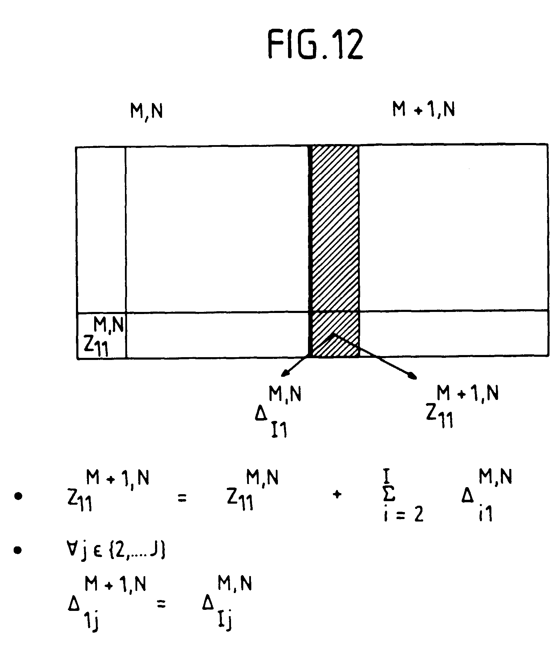

En outre, ce mode particulièrement intéressant de représentation compacte des informations permet des vérifications complètes entre pavés consécutifs. La figure 11 et les formules (IV) illustrent la vérification entre deux pavés consécutifs verticalement (dans la ligne de recouvrement). La figure 12 et les formules (V) illustrent la même vérification, mais pour deux pavés consécutifs horizontalement, dans leur colonne de recouvrement.

En mémorisant de la sorte des informations d'altitude dans la mémoire 30, la Demanderesse a observé que, dans la grande majorité des cas, chaque donnée peut se coder sur quatre bits (au plus).

En outre, il est possible de limiter ces informations:

- des surfaces planes, en particulier les grandes étendues marines, ne nécessitent pratiquement aucun codage ( à l'échelon de la maille) ;
- il est envisageable d'effectuer le codage relatif d'altitude avec une précision (poids du bit le moins significatif ou LSB) qui dépend de l'altitude, proportionnellement par exemple ;
- éventuellement, on tiendra compte tenu du fait que certaines zones du globe terrestre ne sont jamais survolées.

Des travaux de la Demanderesse, il résulte qu'il est possible d'intégrer la surface du globe terrestre, c'est-à-dire une superficie d'environ 500 millions de kilomètres carrés, avec les mailles de définition supérieures prévues pour 1000 aéroports, sur une mémoire dont l'encombrement total serait de 200 Mégabits, ce qui est aisément réalisable avec les techniques actuelles.

Une fois ces données stockées, on les complète d'index permettant, à partir de données exprimées en coordonnées géographiques, de repérer rapidement le ou les pavés relatifs à la zone dans laquelle se trouve l'avion, puis chacune des mailles élémentaires pertinentes, et le cas échéant les mailles de résolution supérieure, si elles existent.

Les fonctions de décompression du bloc 37 consistent alors à restaurer dans la mémoire 40 les altitudes absolues, à l'aide des formules décrites ci-dessus (en tout ou en partie, selon le degré de vérification désiré), compte tenu des

EP 0 565 399 B1

raffinements de codage éventuels.

Le fichier terrain contient donc des altitudes de points du terrain aux noeuds d'un quadrillage en pavés et mailles, avec un mode d'adressage ou d'accès aux données qui part de coordonnées géographiques, en latitude (L) et longitude (G).

Au niveau des pôles, il suffit d'effectuer un changement de repère pour se ramener à une situation classique, un tel changement de repère équivalant pratiquement à échanger les pôles avec deux points opposés de l'équateur, par exemple. Cette indication permettra à l'homme du métier de transposer ce qui suit pour l'appliquer au cas des pôles.

On examinera maintenant les incertitudes, d'une part au niveau des paramètres de vol, d'autre part à celui du fichier terrain.

Quant aux paramètres de vol, l'incertitude dépend des équipements disponibles à bord de l'aéronef.

Une centrale inertielle, même excellente, présenterait une dérive de 10 kilomètres au moins, au bout d'une dizaine d'heures de vol. La Demanderesse préconise d'utiliser une centrale inertielle de bonne qualité, convenablement recalée par rapport à des indications de position issues d'un dispositif tel que le GPS, comme décrit à propos de la figure 3. Dans ces conditions, les coordonnées longitude, latitude, G, L ainsi obtenues sont entachées d'une incertitude qui est celle du matériel GPS, c'est-à -dire d'environ 100 mètres, ou mieux.

Le fichier terrain est également sujet à des incertitudes.

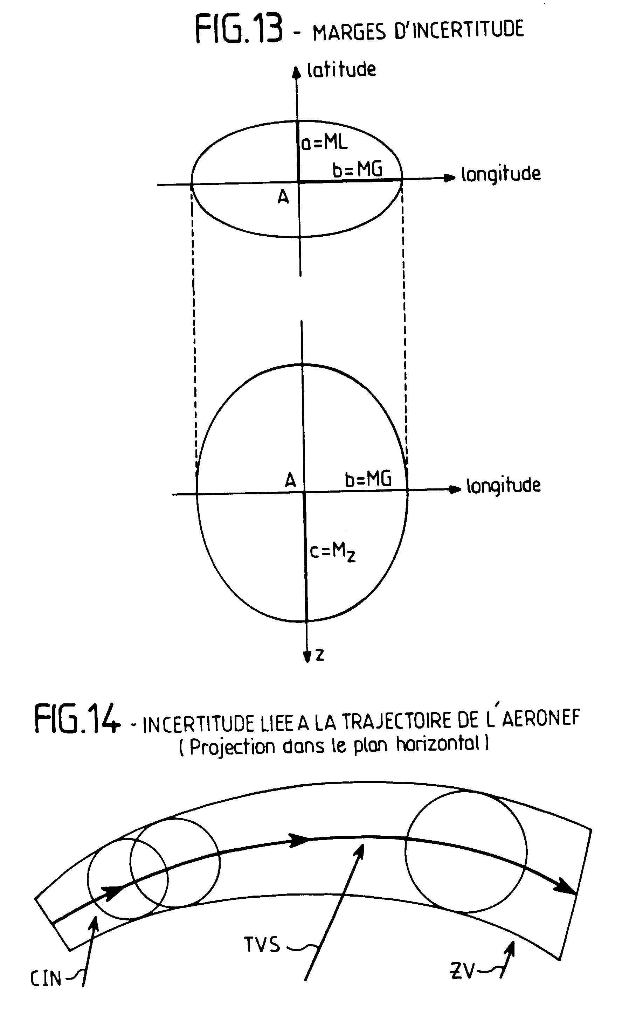

Pour traiter l'ensemble des incertitudes, la Demanderesse propose de définir trois marges d'incertitude (figure 13) :

- une marge d'incertitude en latitude ML,
- une marge d'incertitude en longitude MG, et
- une marge d'incertitude verticale MZ.

Le volume d'incertitude qui en résulte est un ellipsoïde de révolution, dont les demi-axes a, b et c ne sont pas nécessairement égaux (figure 13).

Ainsi, comme illustré sur la figure 14, on associe à chaque point de la trajectoire du vol de l'aéronef un domaine d'incertitude. Pour simplifier, on suppose que ML = MG. Dans la projection verticale dans le plan horizontal de la figure 14, on obtient alors un cercle d'incertitude de navigation CIN (une ellipse dans le cas général). L'enveloppe de ces cercles définit à son tour une zone de vol ZV, autour de la trajectoire de vol prédite TVS.

Il est important de noter que la marge verticale MZ est la somme :

- de la valeur réglable MZC issue du poste de pilotage ou bloc 4,
- d'une marge liée aux incertitudes des paramètres de vol, tels que définis ci-dessus, et
- d'une marge liée aux incertitudes intrinsèques des altitudes du fichier terrain.

En pratique, les incertitudes dans les deux dimensions horizontales (longitude et latitude) vont se traduire finalement en une incertitude sur la marge verticale: en effet, ces incertitudes horizontales induisent une incertitude sur l'"adressage" du fichier terrain, d'où une incertitude en altitude.

A partir de là, la Demanderesse a observé qu'il était possible de conduire des calculs à une cadence de renouvellement de l'ordre du hertz, qui peut être adaptée en fonction de la vitesse et de la fonction de transfert de pilotage de l'aéronef porteur. La cadence du Hertz convient pour des vitesses jusqu'à environ 275 mètres/seconde.

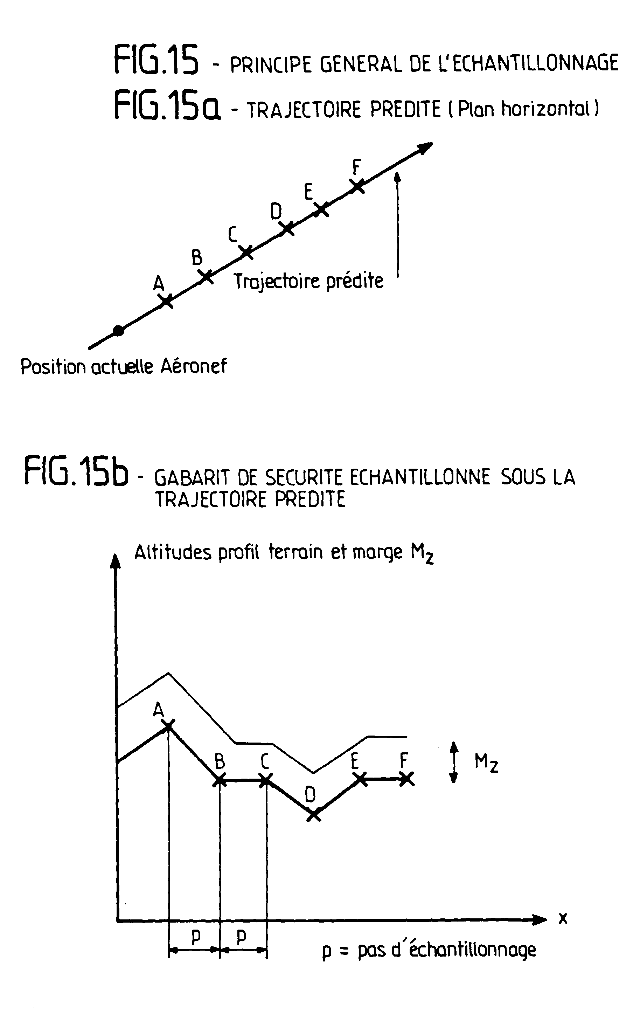

On suppose par exemple que la trajectoire future de l'aéronef est définie par un certain nombre de points A à F à partir de sa position actuelle, comme illustré sur la figure 15a. Cette trajectoire future est établie à partir de la position courante de l'avion (LGZ), et de ses vecteurs vitesse et accélération, associés aux angles respectifs définissant l'attitude de l'aéronef. Le vecteur d'état de l'aéronef (position et vitesse) est positionné dans le trièdre de coordonnées attaché au sol, dans lequel est défini le fichier BDT.

Compte tenu du domaine d'incertitude entourant la position prédite de l'aéronef (considéré pour simplifier comme un cercle de rayon R), et si c dénote le côté de la maille actuellement utilisée (suivant sa résolution), la quantité m de mailles dont l'altitude est à tester est :

$$m = INT\{ 2 * ( [ R * SQRT(2) / c ] + 1) \}$$

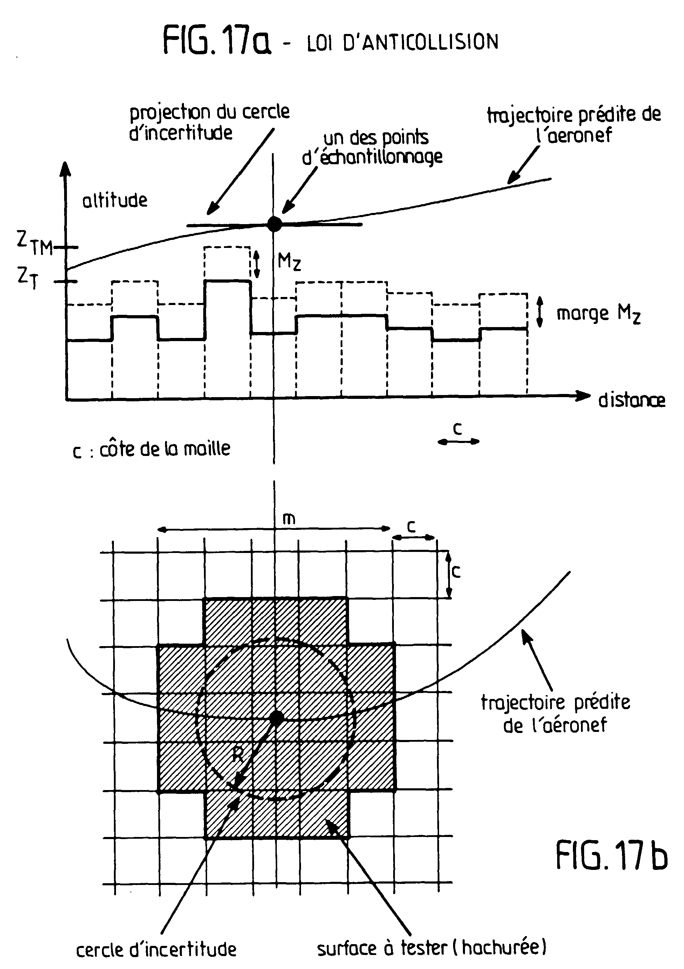

où INT{} désigne la fonction partie entière, et SQRT() la fonction racine carrée. (Figures 17a et 17b)

En un point donné, la "surface carrée" d'incertitude (constituée des mailles enveloppant le domaine d'incertitude) a donc pour dimensions maximales m x m mailles.

Si la trajectoire prédite comporte p points, il convient alors de disposer dans la mémoire locale 40 de p fois cette surface, en altitudes absolues, au moins.

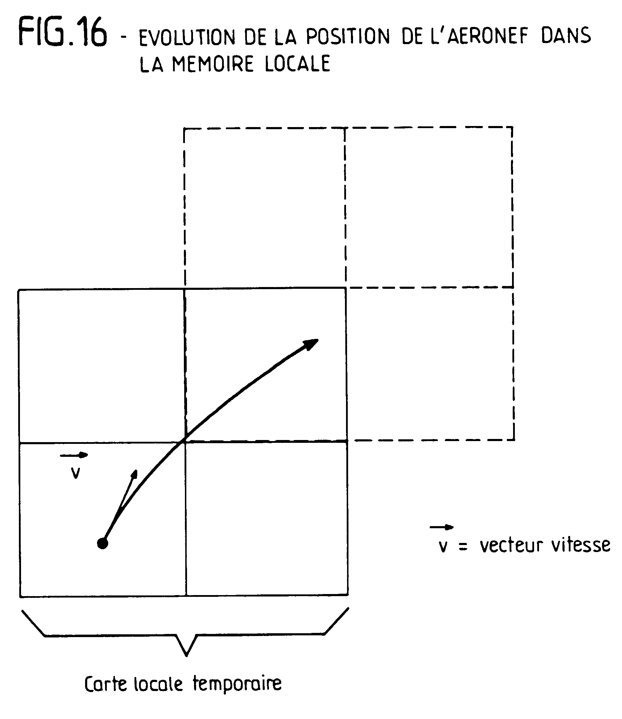

Ainsi, la figure 16 illustre d'une façon schématique l'évolution de la position de l'aéronef, par rapport aux mailles contenues dans la mémoire locale.

La mise à jour de la mémoire locale peut s'effectuer en conservant la région dans laquelle se trouve l'aéronef et en mettant à jour les trois régions voisines, comme illustré en tireté sur la figure 16.

En référence aux figures 17a et 17b, on considère la surface carrée d'incertitude de dimensions maximales m x m mailles. Toutes les altitudes sont lues et seule la valeur de la plus grande altitude $Z_T$ sera conservée, et additionnée à la marge de sécurité d'altitude MZ définie plus haut. La somme, notée ZTM, est illustrée en tireté.

L'ensemble des valeurs ZTM sur la carte donnera le profil théorique sous l'aéronef, et la loi d'anti-collision a pour effet de comparer ce profil théorique sous l'aéronef à la trajectoire prédite de l'aéronef.

Ce mode de travail donne particulièrement satisfaction dans le cas d'un vol en pilotage automatique, car la trajectoire prédite est plus précisément connue.

En mode manuel, la trajectoire de l'aéronef est susceptible de variations plus importantes.

L'analyse de la situation instantanée et prédite de l'aéronef peut alors se résumer à un ensemble de tests de courbes, propre à générer deux types d'alarmes :

- une pré-alarme indiquant une configuration dangereuse à moyen terme, et
- une alarme indiquant une configuration nécessitant une action immédiate du pilote, car la sécurité du vol est mise en cause.

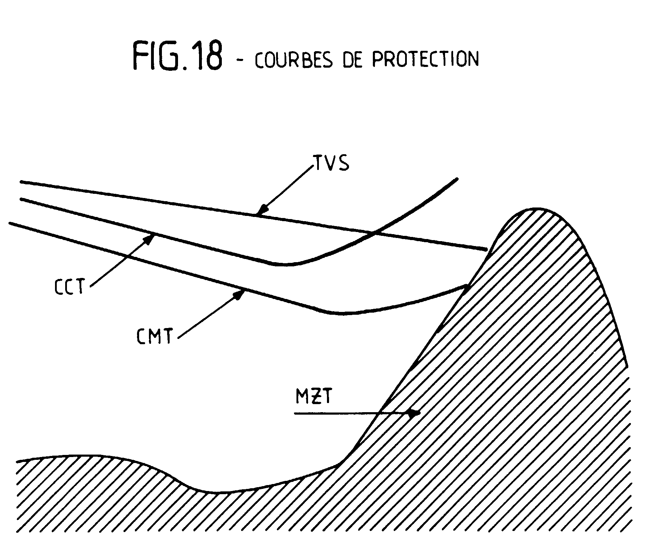

A cet effet, on prévoit deux courbes de protection de l'aéronef vis-à-vis du terrain, définies suivant le même principe mais avec des paramètres différents, et comprenant (figure 18):

- une courbe à court terme CCT, principalement destinée à éviter un accident. Dès qu'un point du terrain entre dans la surface ou enveloppe supérieure de la courbe CCT, le pilote doit intervenir (alarme).
- une courbe à moyen terme CMT, principalement destinée à prévenir le pilote que la trajectoire de son aéronef va rencontrer un obstacle si elle se poursuit telle quelle, et qu'il doit envisager une manoeuvre d'évitement (préalarme).

Ces courbes, qui constituent un élément important du système de protection, peuvent être élaborées à partir de nombreux paramètres statiques et dynamiques de l'aéronef, en particulier :

- la fonction de transfert de pilotage de l'aéronef, c'est-à-dire sa capacité à manoeuvrer,
- les retards $TR_0$ dus au temps de réaction du pilote de l'aéronef,
- la vitesse horizontale $V_h$ de l'aéronef,
- la vitesse ascensionnelle $V_z$ de l'aéronef,
- le facteur de charge admissible n.g,
- la hauteur de sécurité prévue, et
- le roulis de l'avion.

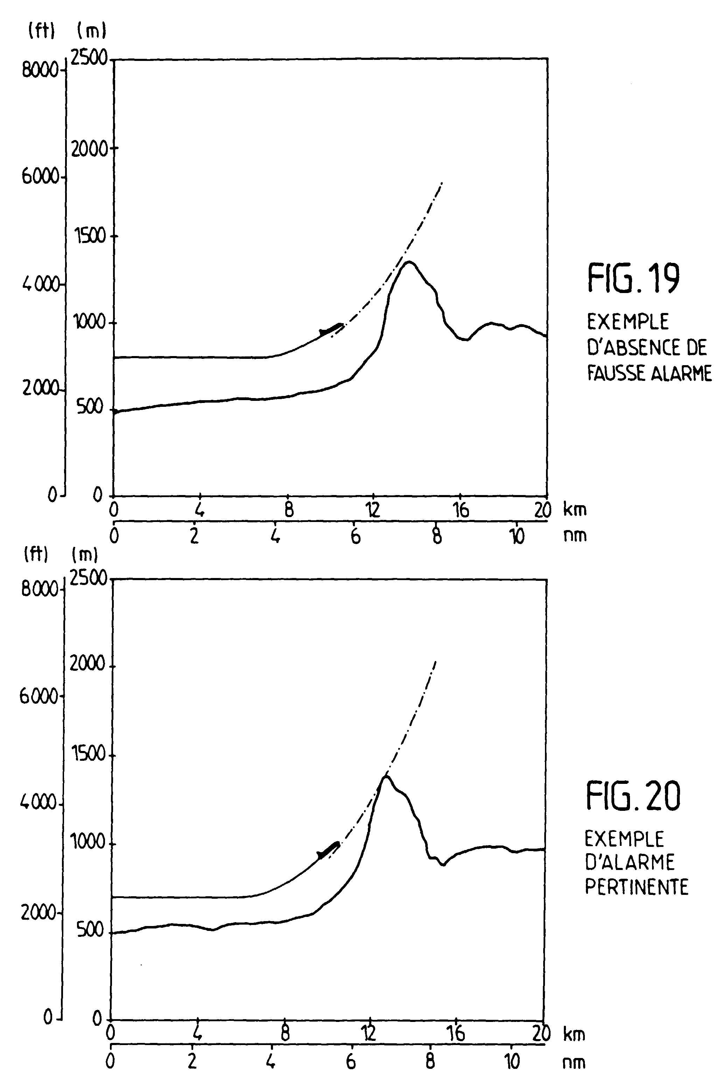

La figure 19 montre un exemple d'absence de fausse alarme. Par contre, un cas d'alarme pertinente est illustré sur la figure 20. La faible différence entre les deux dessins montre la difficulté du problème résolu par l'invention.

En second lieu, lorsqu'une possible collision avec le sol a été détectée, le dispositif proposé peut être muni d'un dispositif de calcul d'une loi d'évitement, effectuée dans le bloc 48, à l'aide des différents paramètres issus des blocs 43, 46 et 40. Par exemple, en cas d'alarme, un ordre de dégagement vertical de l'aéronef est généré. De façon générale, l'ordre d'évitement tiendra compte , notamment:

- de la proximité du danger,
- de la vitesse de l'aéronef,
- de sa "manoeuvrabilité",
- du temps de réaction du pilote,
- des réserves de carburant.

Pour différentes raisons, la Demanderesse estime actuellement préférable d'effectuer une manoeuvre d'évitement simple, constituée par un ordre d'évitement en profondeur permettant d'assurer un survol du terrain (avec redressement de l'aéronef, si nécessaire).

Cet ordre d'évitement peut être affiché sur le directeur d'ordres (bloc 53), ou traité automatiquement.

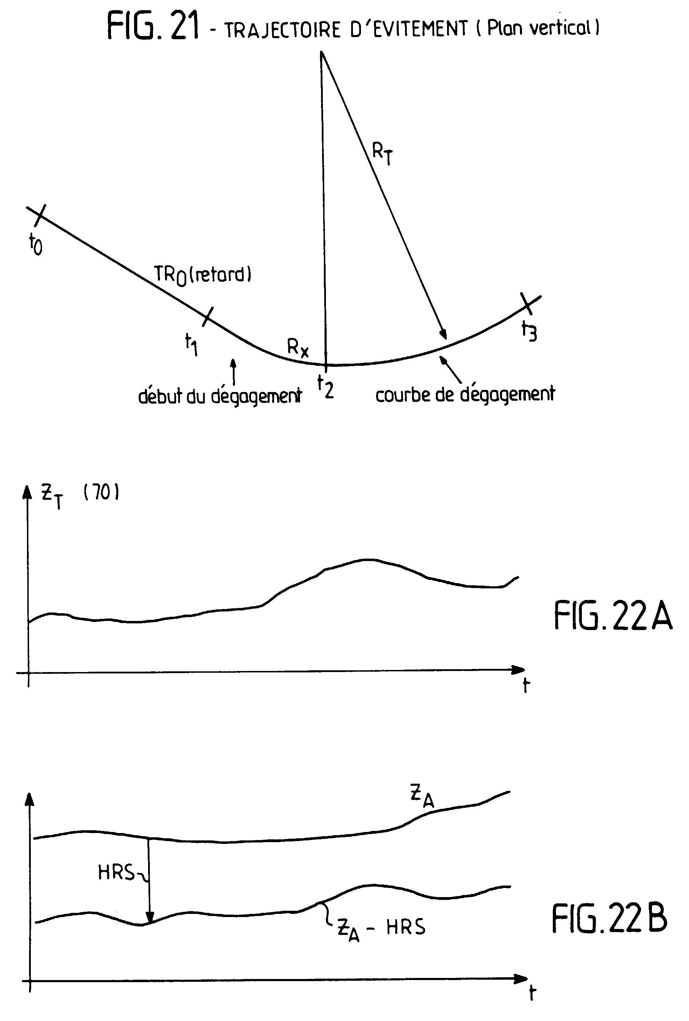

Ainsi, si on prend pour simplifier le cas d'une trajectoire en ligne droite, la courbe limite d'évitement va être définie par trois tronçons (figure 21):

- de $T_0$ à $T_1$, la poursuite de la trajectoire telle quelle pendant un temps égal au retard $RT0 = T_1 - T_0$,

- de $T_1$ à $T_2$, une période de transition due au changement du rayon de courbure de la trajectoire passant de l'infini au rayon RT ascensionnel,
- de $T_2$ à $T_3$, la trajectoire d'évitement proprement dite, dont le rayon de courbure RT est directement fonction du carré de la vitesse linéaire de l'aéronef, divisé par le facteur de charge réellement appliqué, soit

$$R_T = (V_h)^2/n.g$$

L'homme du métier sait que des considérations semblables permettent d'établir une manoeuvre d'évitement en virage, mais d'une façon un peu plus compliquée dans le détail de laquelle il n'est pas utile d'entrer ici.

Des exemples de techniques d'évitement sont décrites dans la Demande de brevet français N° 8617235, au nom de la Demanderesse (FR-A-2607948).

Plus généralement, on connaît des procédés d'évitement de terrain faisant intervenir non seulement des manoeuvres dans le plan vertical mais aussi des manoeuvres dans le plan horizontal. De tels dispositifs sont utilisés actuellement pour certains types d'aéronefs rapides, et peuvent aisément être transposés à des aéronefs civils, sous réserve de disposer d'une puissance de calcul convenable, remarque étant faite que le problème des aéronefs civils est beaucoup moins délicat que celui déjà traité en évitement de terrain.

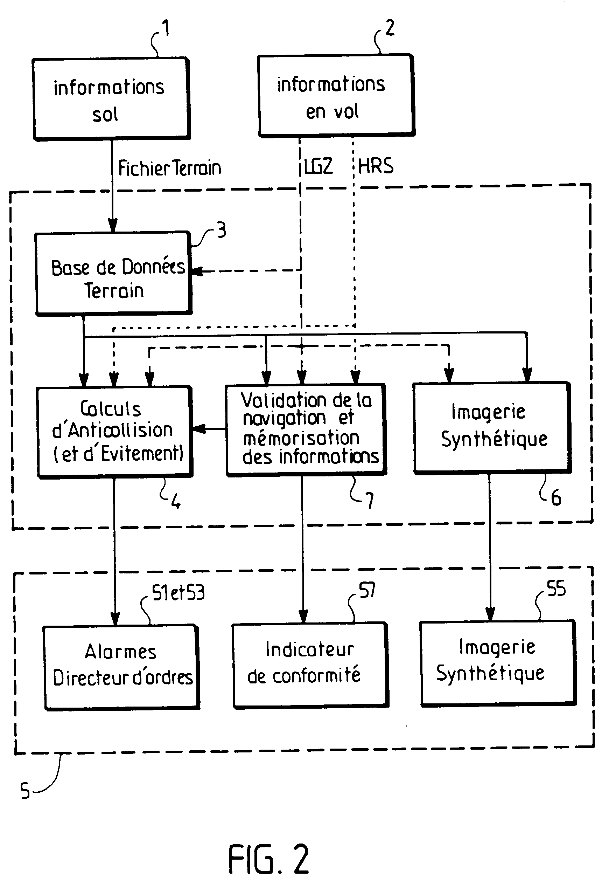

Il reste à considérer le bloc de génération d'une image synthétique (60, figure 2a). Celui-ci peut être réalisé de toute manière appropriée, en particulier de la manière décrite dans le Brevet français No 82 05121 (FR-A-2524117) ou son Certificat d'Addition No 83 16580 (FR-A-2553543), au nom de la Demanderesse.

Les fonctions des sous-ensembles du bloc 7 ont déjà été décrites en termes généraux. On observera tout d'abord que cette fonction ne travaille que sur les données passées et présentes (L, G, Z, et HRS), à l'exclusion des valeurs prédites.

Un exemple de courbe de hauteur du terrain, telle que fournie par la mémoire 70, est illustré sur la figure 22A. De son côté, la figure 22B illustre le calcul de la hauteur du terrain Zta = ZA - HRS dans la mémoire 71.

Le bloc 72 calcule deux écarts :

- deltaP1 = ZT - ZA + HRS, et
- deltaP2, qui est par exemple deltaP1 redressé et filtré, ou tout autre traitement approprié de deltaP1.

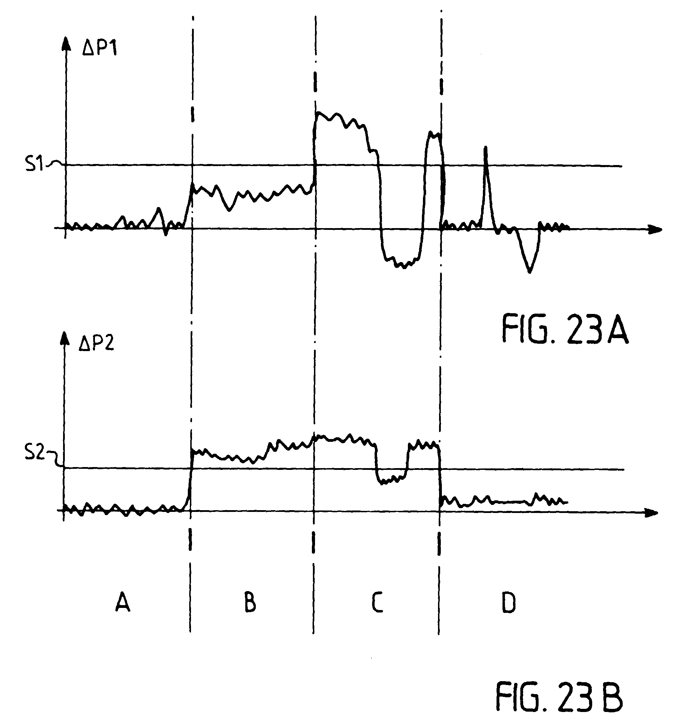

On compare ces deux écarts à des seuils respectifs S1 et S2. Les figures 23A et 23B illustrent les deux écarts et leur seuils, pour montrer quatre situations ou cas différents A à D.

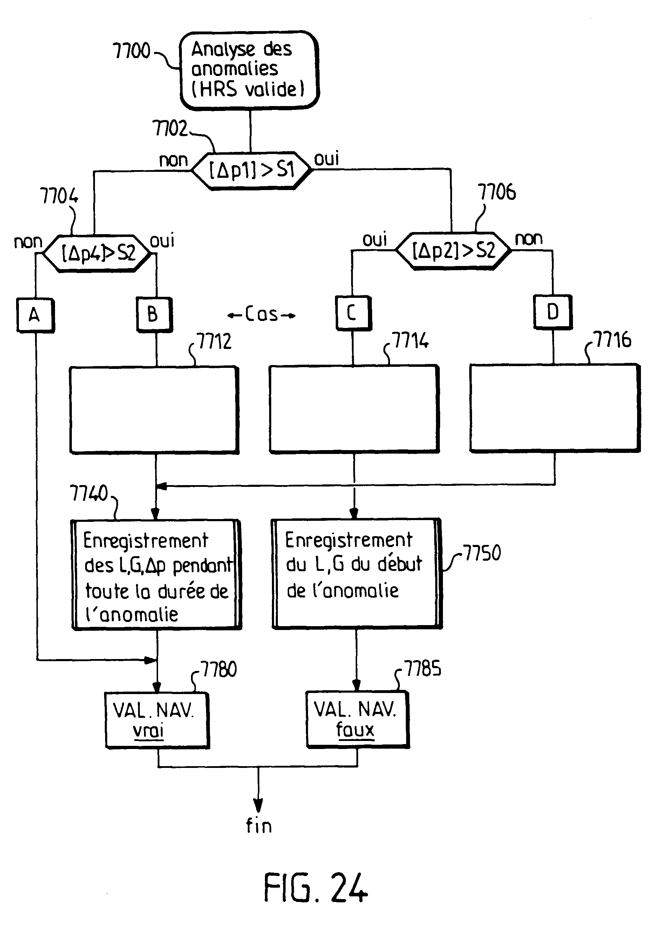

La figure 24 illustre un exemple simplifié de mécanisme d'analyse des anomalies. On suppose que la hauteur radio-sonde HRS est valide (compte-tenu des indications données plus haut).

Après l'étape de départ 7700, un test 7702 compare la valeur absolue de deltaP1 à S1. Ensuite, un test compare la valeur absolue de deltaP2 à S2 (test séparé en 7704 et 7706, suivant le résultat de 7702, pour la clarté du dessin). On a alors :

- le cas A (normal), si deltaP1 <= S1 et deltaP2 <= S2, auquel cas on passe directement en 7780 avec VAL.NAV. vrai.
- le cas B, si deltaP1 <= S1 et deltaP2 > S2. L'altitude Z est décalée. L'étape 7712 recherche éventuellement si le décalage est imputable à ZA (problème relevé sur les instruments de bord) ou à ZT (biais systématique du fichier terrain BDT). De toute façon, l'étape 7740 enregistre en mémoire 79 les grandeurs L, G, et deltaP1, (éventuellement le résultat de l'étape 7712), et ce pendant toute la durée de l'anomalie. Néanmoins, on poursuit en 7780 avec VAL. NAV. vrai.
- le cas C, si deltaP1 > S1 et deltaP2 > S2. L'anomalie vient en principe de l'interrogation du fichier terrain BDT, soit à cause de son adressage (données L et/ou G entachées d'erreur) soit à cause de son contenu. Une analyse historique permattra normalement d'en décider (7714), suivant la répétitivité de l'anomalie. En ce cas, l'étape 7750 enregistre en mémoire 79 les grandeurs L et G (éventuellement le résultat de l'étape 7714), et ce au moins au début de l'anomalie. On poursuit par l'étape 7785, avec VAL.NAV. faux.
- le cas D, si deltaP1 > S1 et deltaP2 ≤ S2. L'étape 7716 peut vérifier qu'il s'agit d'une anomalie ponctuelle, en examinant les hypothèses d'une erreur ponctuelle du fichier terrain BDT, d'un dysfonctionnement ponctuel de l'un des instruments de bord (radioaltimètre, GPS, centrale inertielle) ou du survol d'un obstacle ponctuel non encore répertorié. Là encore, l'étape 7740 enregistre en mémoire 79 les grandeurs L, G, et deltaP1, (éventuellement le résultat de l'étape 7716), et ce pendant toute la durée de l'anomalie. On peut poursuivre en 7780 avec VAL.NAV. vrai.

En ce qui concerne l'utilisation de l'historique des anomalies dans les étapes 7712 à 7716, on en décrira ci-après l'intérêt sur un exemple. Il apparaîtra aussi que les caractéristiques du terrain survolé et en particulier sa planéité (tirée de la mesure ZA - HRS) permettent d'affiner la classification des anomalies. Dans l'exemple choisi, on passe du cas A avec DeltaP1 proche de 0 au cas C où DeltaP1 est très perturbé. Les causes probables de l'anomalie sont alors analysables comme suit :

- si la transition de A à C est accompagnée d'une transition d'un terrain plat à un terrain perturbé, il s'agit très vraisemblablement d'une erreur dans les paramètres de navigation.
- dans les autres cas, il s'agit très vraisemblablement d'une erreur du fichier terrain BDT, où l'on distinguera 3 cas de figure : le terrain reste plat ; on passe d'un terrain perturbé à un autre terrain perturbé, mais avec un décrochage d'altitude à la transition, on passe d'un terrain perturbé à un terrain plat.

Une analyse du même genre peut être conduite avec les autres transitions entre les cas A à D.

Bien entendu, l'invention est susceptible de nombreuses variantes et aménagements.

Par exemple, au voisinage immédiat du sol, le dispositif de l'invention peut devoir être inhibé, au moins quant à ses alarmes. C'est le cas:

- lorsque l'aéronef est en phase d'atterrissage aux instruments (ILS), ou
- à la demande expresse du pilote.

L'inhibition est avantageusement rendue dynamique (signal VAL.NAV. déjà cité).

Par ailleurs, il peut être intéressant d'utiliser deux fichiers terrain 30, l'un pour le relief fixe dans le temps (altimétrie naturelle), l'autre pour des obstacles construits et/ou évolutifs (altimétrie artificielle).

ANNEXE - FORMULES

$$(I) \qquad Z_A = Z_{11} + \sum_{j=2}^{j_A} \Delta_{1j} + \sum_{i=2}^{i_A} \Delta_{ij_A}$$

$$(II) \qquad Z_A = Z_{11}^{M,N+1} - \sum_{j=j_A+1}^{J} \Delta_{1j}^{MN} + \sum_{i=2}^{i_A} \Delta_{ij_A}^{MN}$$

$$(III) \qquad Z_A = Z_{11}^{M,N-1} + \sum_{j=2}^{j_A} \Delta_{1j}^{M,N+1} - \sum_{i=i_A+1}^{I} \Delta_{ij_A}^{MN}$$

$$(IV) \qquad Z_{11}^{M,N+1} = Z_{11}^{M,N} + \sum_{j=2}^{J} \Delta_{1j}^{M,N}$$

$$\forall\, i \in \{2....I\}$$

$$\Delta_{i1}^{M,N+1} = \Delta_{iJ}^{M,N}$$

$$(V) \qquad Z_{11}^{M+1,N} \quad = \quad Z_{11}^{M,N} \quad + \quad \sum_{i=2}^{I} \Delta_{i1}^{M,N}$$

$$\forall j \in \{2,.....J\}$$

$$\Delta_{1j}^{M+1,N} \quad = \quad \Delta_{1j}^{M,N}$$

**Revendications**

1. Dispositif d'aide à la navigation aérienne, du type comprenant:

   - une mémoire de masse (30) apte à stocker des données d'altitude-seuil, chaque altitude-seuil étant adressable par deux coordonnées horizontales,
   - des entrées pour recevoir des informations d'état (L,G,Z), représentatives de La position mesurée et du mouvement de l'aéronef,
   - une mémoire de travail (40),
   - des moyens de gestion de la mémoire de masse (35) pour stocker dans la mémoire de travail (40) l'altitude-seuil correspondant à la position présente de l'aéronef,
   - des moyens pour surveiller une condition choisie, portant sur la relation entre l'altitude mesurée (Z) et l'altitude-seuil de la mémoire de travail, afin d'établir une action telle qu'une alarme lorsque cette condition implique un passage sous une altitude de sécurité,

   caractérisé en ce que la mémoire de masse est organisée en base de données altimétrique, couvrant une partie substantielle de la surface terrestre, avec une indexation permettant l'accès rapide à des jeux de mailles contiguës que contient ladite base de données, en fonction des deux coordonnées horizontales, selon au moins un niveau de résolution,
   en ce que, pour chaque maille, l'altitude-seuil est une représentation directe de l'altitude maximale du sol à l'intérieur de cette maille,
   en ce que, la mémoire de travail (40) est une mémoire rapide, de taille propre à recevoir une carte locale temporaire, définissant une enveloppe en altitude dans la zone où évolue l'aéronef,
   en ce que le dispositif comprend:

   - des moyens de traitement des informations d'état (2; 28), pour définir des altitudes prédites, en correspondance de positions prédites de l'aéronef, et
   - des moyens de traitement anti-collision (4; 43, 46) pour :

     . définir (43) un domaine de protection autour de l'aéronef, en correspondance d'une suite de positions prédites de l'aéronef, et
     . comparer ce domaine de protection à l'enveloppe d'altitude dans la partie correspondante de ladite carte locale,

   une alarme (51) étant établie si la relation entre le domaine de protection et l'enveloppe en altitude, satisfait une condition anti-collision, impliquant un franchissement vers le bas d'une marge de sécurité en altitude.

2. Dispositif selon la revendication 1, caractérisé en ce qu'il comporte des moyens de validation (7) pour comparer, sur la trajectoire réelle de l'aéronef, le terrain défini par la mémoire rapide au terrain défini par les instruments de bord, et des moyens élaborant un signal (VAL.NAV.) de validation des moyens de traitement anti-collision (4), en fonction de la comparaison faite par les moyens de validation.

3. Dispositif selon la revendication 2, caractérisé en ce que les moyens de validation (7) comprennent une mémoire (70) relative au terrain survolé d'après le fichier, une mémoire (71) relative au terrain survolé d'après les instruments de bord, des moyens (72) pour établir au moins une grandeur représentative de l'écart entre ces deux mémoires, et des moyens (74,75) pour comparer cette grandeur d'écart à un seuil.

**4.** Dispositif selon la revendication 3, caractérisé en ce qu'il comprend des moyens d'analyse (77) pour commander un affichage (57) de la comparaison entre les deux mémoires de terrain survolé.

**5.** Dispositif selon l'une des revendications 2 à 4, caractérisé en ce que les moyens de validation (7) comportent des moyens (79) pour mémoriser certains au moins des écarts relevés.

**6.** Dispositif selon l'une des revendications 2 à 5, caractérisé en ce que lesdites mémoires (70,71) travaillent sur la hauteur du sol, la seconde mémoire (71) recevant l'altitude (ZA) et une hauteur de l'aéronef au dessus du sol (HRS).

**7.** Dispositif selon l'une des revendications 1 à 6, caractérisé en ce que le maillage comprend des mailles de base dont certaines sont subdivisées par au moins un niveau de maillage de résolution plus fine, en particulier au voisinage des aéroports.

**8.** Dispositif selon l'une des revendications 1 à 7, caractérisé en ce que la mémoire de masse est structurée en blocs, chaque bloc étant associé à une donnée d'altitude de référence exprimée en valeur absolue, tandis que l'altitude maximale dans chaque maille du bloc est exprimée en valeur relative, par rapport à une maille voisine, conformément à une loi prédéterminée de parcours des mailles à l'intérieur d'un bloc, et en ce que les moyens de gestion de la mémoire de masse (35) sont agencés pour convertir les altitudes relatives en altitudes absolues, lors de leur chargement en mémoire de travail.

**9.** Dispositif selon la revendication 8, caractérisé en ce que chaque bloc possède un recouvrement d'au moins une maille de base sur deux côtés adjacents avec ses voisins, les moyens de gestion de mémoire (35) étant capables de vérifier la cohérence des données d'altitude relatives entre différents blocs, du fait de leur recouvrement.

**10.** Dispositif selon l'une des revendications 1 à 9, caractérisé en ce qu'il comporte des moyens (25) pour valider des données de position d'un instrument de radionavigation (21) par rapport à celles d'un instrument de bord inertiel (20), les données (L,G) ainsi validées servant à la prédiction (28) de la trajectoire de l'aéronef et à l'adressage de la mémoire rapide (40).

**11.** Dispositif selon l'une des revendications 1 à 10, caractérisé en ce que lesdites entrées reçoivent également des indications de commande qui comportent la définition d'une marge de sécurité d'altitude (MZC), et en ce que ladite première condition porte sur le fait que la distance verticale entre le domaine de protection et ladite enveloppe en altitude est inférieure à cette marge de sécurité d'altitude.

**12.** Dispositif selon l'une des revendications 1 à 11, caractérisé en ce que les moyens de traitement anti-collision sont également agencés pour émettre une pré-alarme indiquant un danger de collision avec le sol à moyen terme, en fonction d'une seconde condition anti-collision.

**13.** Dispositif selon l'une des revendications 1 à 12, caractérisé en ce qu'il comporte des moyens capables, en cas d'alarme, d'établir un ordre de pilotage souhaitable, en fonction d'une loi d'évitement de terrain, propre à l'aéronef.

**14.** Dispositif selon la revendication 13, caractérisé en ce que la loi d'évitement tient compte d'angles d'attitude de l'aéronef, en particulier du fait que l'aéronef vole en ligne droite ou est en virage.

**15.** Dispositif selon la revendication 14, caractérisé en ce que les angles d'attitude sont tirés de la centrale inertielle.

**16.** Dispositif selon l'une des revendications 1 à 15, caractérisé en ce que la première condition anti-collision comprend la considération d'une trajectoire de pilotage à cabrer d'amplitude quasi-maximale après un bref retard.

**17.** Dispositif selon la revendication 16, prise en combinaison avec la revendication 12, caractérisé en ce que la seconde condition anti-collision comprend la considération d'une autre trajectoire, de pilotage à cabrer d'amplitude au plus aussi prononcée que celle de la première trajectoire, après un retard plus long.

**18.** Dispositif selon l'une des revendications 1 à 17, caractérisé en ce que les moyens de gestion de la base de données utilisent un changement de repère dans les zones entourant les pôles terrestres.

19. Dispositif selon l'une des revendications 1 à 18, caractérisé en ce qu'il comporte des moyens (60) pour afficher une image synthétique du terrain, en fonction du contenu de la mémoire rapide.

20. Dispositif selon l'une des revendications précédentes, caractérisé en ce que les indications d'état proviennent d'au moins un capteur choisi dans le groupe comprenant: au moins une centrale inertielle de bord, un instrument de radionavigation, en particulier fondé sur satellite, un radio-altimètre, un baro-altimètre, un système d'atterrissage aux instruments.

21. Dispositif selon l'une des revendications précédentes, caractérisé en ce que les moyens de traitement des informations d'état (2; 28) et les moyens de traitement anti-collision (4; 43, 46) opèrent à une cadence de renouvellement de l'ordre du Hertz.

22. Dispositif selon l'une des revendications précédentes, caractérisé en ce que les entrées reçoivent également l'une au moins des informations suivantes: pilotage automatique ou manuel, aéronef en virage ou en ligne droite, caractéristiques de vol de l'aéronef.

23. Dispositif selon l'une des revendications précédentes, caractérisé en ce qu'il est susceptible d'un fonctionnement au moins partiellement modifié au voisinage du sol, en particulier en phase d'atterrissage aux instruments.

24. Procédé d'aide à la navigation aérienne, mettant en oeuvre un dispositif installé dans un aéronef, du type comprenant:

- une mémoire de masse (30) apte à stocker des données d'altitude-seuil, chaque altitude-seuil étant adressable par deux coordonnées horizontales,
- des entrées pour recevoir des informations d'état (L,G,Z) en provenance d'instruments de bord et représentatives de la position mesurée et du mouvement de l'aéronef,
- une mémoire de travail (40),
- des moyens de gestion de la mémoire de masse (35) pour stocker dans la mémoire de travail (40) l'altitude-seuil correspondant à la position présente de l'aéronef,
- des moyens pour surveiller une condition choisie, portant sur la relation entre l'altitude mesurée (Z) et l'altitude-seuil de la mémoire de travail, afin d'établir une action telle qu'une alarme lorsque cette condition implique un passage sous une altitude de sécurité,

caractérisé en ce qu'il comporte les étapes suivantes:

A - au sol, entretenir une base de données de terrain représentant au moins une partie substantielle du globe terrestre,

B - à bord de l'aéronef,

B.1 - prévoir une mémoire de masse apte à stocker une base de données extraite de la base de données de terrain, et représentant au moins une partie substantielle du globe terrestre, sous la forme d'un découpage comprenant un maillage sur au moins un niveau de résolution, chaque maille étant associée à des données représentant l'altitude maximale à l'intérieur de la maille, et une indexation permettant l'accès rapide à des jeux de mailles contiguës que contient ladite base de données, en fonction d'un adressage en coordonnées de position horizontale,

B.2 - recevoir des instruments de bord, sur les entrées, deux composantes horizontales de la position de l'aéronef, une information verticale, et le vecteur vitesse de l'aéronef,

B.3 - en fonction de deux composantes horizontales de la position de l'aéronef, charger dans une mémoire rapide de travail une carte locale temporaire, définissant une enveloppe en altitude absolue du terrain, dans la zone où évolue l'aéronef,

B.4 - en fonction de la position, et du vecteur vitesse de l'aéronef, estimer une pluralité de points de la trajectoire prédite de l'aéronef,

B.5 - en chaque point prédit, comparer le contour d'un domaine de protection autour de l'aéronef, à l'enveloppe d'altitude dans la partie correspondante de ladite carte locale, et

B.6 - établir une alarme si la relation entre le domaine de protection et l'enveloppe en altitude satisfait une condition anti-collision, cette condition représentant le franchissement vers le bas d'une marge de sécurité en altitude.

**25.** Procédé selon la revendication 24, caractérisé en ce qu'il comprend en outre une étape de validation (7) pour comparer, sur la trajectoire réelle de l'aéronef, le terrain défini par la mémoire rapide au terrain défini par les instruments de bord.

**26.** Procédé selon la revendication 25, caractérisé en ce que la validation comprend la mémorisation d'écarts, et en ce que l'étape A comprend la mise à jour de la base de données de terrain à partir de certains au moins des écarts mémorisés.

**27.** Procédé selon l'une des revendications 24 à 26, caractérisé en ce que le maillage de l'étape B1 comprend, outre les mailles de base, des mailles intermédiaires subdivisant certaines des mailles de base, et des mailles ultimes subdivisant à leur tour certaines des mailles intermédiaires, lesdites mailles intermédiaires et ultimes étant prévues au moins au voisinage de zones aéroportuaires.

**28.** Procédé selon l'une des revendications 24 à 27, caractérisé en ce qu'à l'étape B.1, les mailles sont regroupées en blocs ou pavés, chaque bloc étant associé à une donnée d'altitude de référence exprimée en valeur absolue, tandis que l'altitude maximale dans chaque maille est exprimée en valeur relative, par rapport à une maille voisine, conformément à une loi prédéterminée de parcours des mailles à l'intérieur d'un bloc, et en ce qu'il est prévu une mémoire rapide de travail, où les altitudes relatives sont converties en altitudes absolues.

**29.** Procédé selon l'une des revendications 24 à 28, caractérisé en ce que l'étape B.2 comporte la validation de données de position d'un instrument de radionavigation (21) par rapport à celles d'un instrument de bord inertiel (20), les données (L,G) ainsi validées servant aux étapes B.3 et B.4.

**30.** Procédé selon l'une des revendications 24 à 29, caractérisé en ce qu'il comprend en outre, en cas d'alarme, l'établissement d'un ordre d'évitement, en fonction d'une loi d'évitement de terrain, propre à l'aéronef.

**Patentansprüche**

**1.** Vorrichtung zur Grundkollisinsvermeidung bzw. Luftfahrt-Navigationshilfe, umfassend:

- einen Großspeicher (30), der Höhenschwellenwert-Daten speichern kann, wobei jeder Höhen-Schwellenwert durch zwei horizontale Koordinaten adressierbar ist,
- Eingänge um Lageinformationen bzw. -daten (L,G,Z) zu empfangen, die repräsentativ sind für die gemessene Position und die Bewegung des Flugzeugs,

- - einen Arbeitsspeicher (40),

- Verwaltungseinrichtungen des Großspeichers (35) um in dem Arbeitsspeicher (40) den der gegenwärtigen Position des Flugzeugs entsprechende Höhen-Schwellenwert zu speichern,
- Einrichtungen um eine gewählte Bedingung zu überwachen, die sich auf die Relation zwischen der gemessenen Höhe (Z) und dem Höhen-Schwellenwert des Arbeitsspeichers bezieht, um eine Aktion wie einen Alarm zu bewirken, wenn diese Bedingung ein Passieren unter eine Sicherheitshöhe impliziert,

**dadurch gekennzeichnet**, daß der Großspeicher organisiert ist als Höhenmessungs-Datenbasis, einen wesentlichen Teil der Erdoberfläche umfassend, mit einer Indexierung, die einen schnellen Zugriff auf Gruppen von aneinandergrenzenden Maschen, welche die genannte Datenbasis enthält, aufgrund der beiden horizontalen Koordinaten entsprechend wenigstens einer Auflösungsebene ermöglicht,
dadurch, daß für jede Masche der Höhen-Schwellenwert eine direkte Darstellung der Maximalhöhe des Grunds bzw. Bodens innerhalb dieser Masche ist,
dadurch, daß der Arbeitsspeicher (40) ein schneller Speicher von geeigneter Größe ist, um eine temporäre lokale Karte aufzunehmen, die in der Zone, in der sich das Flugzeug bewegt, eine Höhen-Hüllfläche definiert,
dadurch, daß die Vorrichtung umfaßt:

- Verarbeitungseinrichtungen der Lageinformationen bzw. -daten (2; 28), um vorausgesagte Höhen zu definieren, in Übereinstimmung mit vorausgesagten Positionen des Flugzeugs, und

- Antikollisions-Verarbeitungseinrichtungen (4; 43, 46), um:

  . einen Schutzbereich um das Flugzeug herum zu definieren (43), in Übereinstimmung mit einer Folge von vorausgesagten Positionen des Flugzeugs, und
  . diesen Schutzbereich zu vergleichen mit der Höhen-Hüllfläche in dem entsprechenden Teil der genannten lokalen Karte,

  wobei ein Alarm (51) ausgelöst wird, wenn die Relation zwischen dem Schutzbereich und der Höhen-Hüllfläche eine Antikollisionsbedingung erfüllt, ein nach unten gerichtetes Überschreiten eines Sicherheitshöhenabstands implizierend.

2. Vorrichtung nach Anspruch 1, dadurch gekennzeichnet, daß sie Freigabeeinrichtungen (7) umfaßt um, auf der tatsächlichen Bahn des Flugzeugs, das durch den schnellen Speicher definierte Gelände zu vergleichen mit dem durch die Bordinstrumente des Flugzeugs definierten Gelände, und Einrichtungen zum Erzeugen eines Freigabesignals (VAL.NAV) der Antikollisions-Verarbeitungseinrichtungen (4) in Abhängigkeit von dem durch die Freigabeeinrichtungen durchgeführten Vergleich.

3. Vorrichtung nach Anspruch 2, dadurch gekennzeichnet, daß die Freigabeeinrichtungen (7) einen das nach der Datei überflogene Gelände betreffenden Speicher (70), einen das nach den Bordinstrumenten überflogene Gelände betreffenden Speicher (71), Einrichtungen (72) zum Erstellen von wenigstens einer für die Abweichung bzw. den Unterschied zwischen diesen beiden Speichern repräsentativen Größe umfassen und Einrichtungen zum Vergleichen dieser Abweichungsgröße mit einem Schwellenwert.

4. Vorrichtung nach Anspruch 3, dadurch gekennzeichnet, daß sie Analyseeinrichtungen (77) umfassen, um eine Anzeige (57) des Vergleichs zwischen den beiden Speichern des überflogenen Geländes zu steuern.

5. Vorrichtung nach einem der Ansprüche 2 bis 4, dadurch gekennzeichnet, daß die Freigabeeinrichtungen (7) Einrichtungen (79) zum Speichern von wenigstens einigen der abgelesenen Abweichungen umfassen.

6. Vorrichtung nach einem der Ansprüche 2 bis 5, dadurch gekennzeichnet, daß besagte Speicher (70,71) auf bzw. nach der Bodenhöhe arbeiten, wobei der zweite Speicher (71) die Höhe (ZA) empfängt und eine Höhe des Flugzeugs über dem Boden (HRS).

7. Vorrichtung nach einem der Ansprüche 1 bis 6, dadurch gekennzeichnet, daß das Netzwerk Basis-Maschen umfaßt, von denen bestimmte unterteilt sind durch wenigstens eine Netzwerkebene von feinerer Auflösung, insbesondere in der Nähe der Flughäfen.

8. Vorrichtung nach einem der Ansprüche 1 bis 7, dadurch gekennzeichnet, daß der Großspeicher in Blöcke gegliedert ist, wobei jeder Block verbunden ist mit einer als Absolutwert ausgedrückten Höhen-Bezugsgröße, während die Maximalhöhe in jeder Masche des Blocks als Relativwert ausgedrückt ist, bezogen auf eine benachbarte Masche, in Übereinstimmung mit einem festgelegten Gesetz des Durchlaufens der Maschen im Innern eines Blocks, und dadurch, daß die Verwaltungseinrichtungen des Großspeichers (35) fähig sind, die relativen Höhen in absolute Höhen umzuwandeln, wenn sie in den Arbeitsspeicher geladen werden.

9. Vorrichtung nach Anspruch 8, dadurch gekennzeichnet, daß jeder Block eine Überlappung von wenigstens einer Basis-Masche auf zwei an ihre Nachbarn angrenzenden Seiten aufweist, wobei die Speicherverwaltungseinrichtungen (35) fähig sind, die Kohärenz der relativen Höhendaten zwischen verschiedenen Blöcken zu überprüfen aufgrund ihrer überlappung.

10. Vorrichtung nach einem der Ansprüche 1 bis 9, dadurch gekennzeichnet, daß sie Einrichtungen (25) umfaßt, um Positionsdaten eines Funknavigationsinstruments (21) freizugeben bzw. zu bestätigen in bezug auf diejenigen eines Bord-Trägheitsinstruments (20), wobei die einmal freigegebenen Daten (L,G) der Voraussage (28) der Bahn des Flugzeugs und der Adressierung des schnellen Speichers (40) dienen.

11. Vorrichtung nach einem der Ansprüche 1 bis 10, dadurch gekennzeichnet, daß die genannten Eingänge ebenfalls Steuerungsangaben empfangen, die die Definition eines Höhen-Sicherheitsabstands (MZC) umfassen, und dadurch, daß die genannte erste Bedingung sich auf die Tatsache bezieht, daß die vertikale Distanz zwischen dem Schutzbereich und besagter Höhen-Hüllfläche kleiner ist als dieser Höhen-Sicherheitsabstand.

**12.** Vorrichtung nach einem der Ansprüche 1 bis 11, dadurch gekennzeichnet, daß die Antikollisions-Verarbeitungseinrichtungen ebenfalls fähig sind, einen Voralarm auszusenden, der eine mittelfristige Grundkollisionsgefahr anzeigt, in Abhängigkeit von einer zweiten Antikollisionsbedingung.

**13.** Vorrichtung nach einem der Ansprüche 1 bis 12, dadurch gekennzeichnet, daß sie Einrichtungen umfaßt, die fähig sind im Alarmfall einen Befehl bezüglich der wünschenswerten Steuerung zu erstellen, entsprechend einem dem Flugzeug eigenen Gelände-Ausweichgesetz.

**14.** Vorrichtung nach Anspruch 13, dadurch gekennzeichnet, daß das Ausweichgesetz Fluglagewinkeln des Flugzeugs Rechnung trägt, insbesondere der Tatsache, daß das Flugzeug eine gerade Linie oder eine Kurve fliegt.

**15.** Vorrichtung nach Anspruch 14, dadurch gekennzeichnet, daß die Fluglagewinkel durch das Trägheitsnavigations-Leitwerk geliefert werden.

**16.** Vorrichtung nach einem der Ansprüche 1 bis 15, dadurch gekennzeichnet, daß die erste Antikollisionsbedingung die Erwägung umfaßt, die Flugbahn nach einer kurzen Verzögerung quasi-maximal hochzuziehen.

**17.** Vorrichtung nach Anspruch 16, kombiniert mit dem Anspruch 12, dadurch gekennzeichnet, daß die zweite Antikollisionsbedingung die Erwägung einer anderen Flugbahn umfaßt, wobei das Hochziehen höchstens ebenso ausgeprägt ist wie bei der ersten Flugbahn, nach einer längeren Verzögerung.

**18.** Vorrichtung nach einem der Ansprüche 1 bis 17, dadurch gekennzeichnet, daß die Verwaltungseinrichtungen der Datenbasis in den die Erdpole umgebenden Zonen einen Bezugssystem-Wechsel benutzen.

**19.** Vorrichtung nach einem der Ansprüche 1 bis 18, dadurch gekennzeichnet, daß sie Einrichtungen (60) umfassen zum Anzeigen eines synthetischen Geländebilds, abhängig vom Inhalt des schnellen Speichers.

**20.** Vorrichtung nach einem der vorangehenden Ansprüche, dadurch gekennzeichnet, das die Lageangaben von wenistens einem Sensor kommen, ausgewählt aus der Gruppe, die umfaßt: wenigstens ein Bord-Trägheitsnavigations-Leitwerk, ein Funknavigationsinstrument, insbesondere satellitengestützt, einen Funk-Höhenmesser, ein Höhenbarometer, ein Instrumentenlandesystem.

**21.** Vorrichtung nach einem der vorangehenden Ansprüche, dadurch gekennzeichnet, daß die Lagedaten-Verarbeitungseinrichtungen (2; 28) und die Antikollisions-Verarbeitungseinrichtungen (4; 43, 46) mit einem Erneuerungstakt in der Größenordnung von 1HZ arbeiten.

**22.** Vorrichtung nach einem der vorangehenden Ansprüche, dadurch gekennzeichnet, daß die Eingänge ebenfalls wenigstens eine der folgenden Informationen erhalten: automatische oder manuelle Steuerung, Flugzeug fliegt Kurve oder gerade Linie, Flugcharakteristika des Flugzeugs.

**23.** Vorrichtung nach einem der vorangehenden Ansprüche, dadurch gekennzeichnet, daß sie sich eignet für einen in Bodennähe wenigstens partiell modifizierten Betrieb, insbesondere während der Instrumentenlandephase.

**24.** Verfahren zur Luftfahrt-Navigationshilfe, das eine in einem Flugzeug installierte Vorrichtung des Typs benutzt, der umfaßt:

- einen Großspeicher (30), der Höhenschwellenwert-Daten speichern kann, wobei jeder Höhen-Schwellenwert durch zwei horizontale Koordinaten adressierbar ist,
- Eingänge um Lageinformationen bzw. -daten (L,G,Z) zu empfangen, die repräsentativ sind für die gemessene Position und die Bewegung des Flugzeugs,
- einen Arbeitsspeicher (40),
- Verwaltungseinrichtungen des Großspeichers (35) um in dem Arbeitsspeicher (40) den der gegenwärtigen Position des Flugzeugs entsprechende Höhen-Schwellenwert zu speichern,
- Einrichtungen um eine gewählte Bedingung zu überwachen, die sich auf die Relation zwischen der gemessenen Höhe (Z) und dem Höhen-Schwellenwert des Arbeitsspeichers bezieht, um eine Aktion wie einen Alarm zu bewirken, wenn diese Bedingung ein Passieren unter eine Sicherheitshöhe impliziert,

**dadurch gekennzeichnet,** daß es die folgenden Schritte umfaßt:

A - am Boden, Unterhalten einer Geländedatenbasis, die wenigstens einen wesentlichen Teil der Erdkugel darstellt,
B - an Bord des Flugzeugs,

B.1 - Vorsehen eines Großspeichers, fähig, eine aus der Geländedatenbasis extrahierte bzw. gewonnene Datenbasis zu speichern, die wenigstens einen wesentlichen Teil des Erdballs in Form einer Aufteilung darstellt, welche ein Netzwerk auf wenigstens einer Auflösungsebene umfaßt, wobei jede Masche Daten zugeordnet ist, die die maximale Höhe innerhalb dieser Masche darstellen, und eine Indexierung, die aufgrund einer Adressierung mit horizontalen Lage-Koordinaten einen schnellen Zugriff auf Gruppen von aneinandergrenzenden Maschen ermöglicht, die die genannte Datenbasis enthält,
B.2 - Empfangen, von den Bordinstrumenten, auf den beiden Eingängen, zweier horizontaler Komponenten der Flugzeugposition, einer Vertikalinformation, und des Geschwindigkeitsvektors des Flugzeugs,
B.3 - Laden, in einen schnellen Arbeitsspeicher, in Abhängigkeit von zwei horizontalen Komponenten der Flugzeugposition, einer temporären lokalen Karte, die eine absolute Höhen-Hüllfläche des Geländes der Zone definiert, wo sich das Flugzeug bewegt.
B.4 - Vorausberechnen einer Vielzahl von Punkten der vorausgesagten Bahn des Flugzeugs in Abhängigkeit von der Position und dem Geschwindigkeitsvektor des Flugzeugs,
B.5 - Vergleichen, in jedem vorausgesagten Punkt, der Kontur eines Schutzbereichs um das Flugzeug herum mit der Höhen-Hüllfläche in dem entsprechenden Teil der lokalen Karte, und
B.6 - Erzeugen eines Alarms, wenn die Relation zwischen dem Schutzbereich und der Höhen-Hüllfläche eine Antikollisionsbedingung erfüllt, wobei diese Bedingung das nach unten gerichtete Überschreiten eines Sicherheitshöhenabstands darstellt.

25. Vorrichtung nach Anspruch 24, dadurch gekennzeichnet, daß es außerdem einen Freigabe- bzw. Bestätigungsschritt (7) umfaßt, um, auf der tatsächlichen Bahn des Flugzeugs, das durch den schnellen Speicher definierte Gelände zu vergleichen mit dem durch die Bordinstrumente definierten Gelände.

26. Vorrichtung nach Anspruch 25, dadurch gekennzeichnet, daß die Freigabe die Speicherung der Unterschiede bzw. Abweichungen umfaßt, und dadurch, daß der Schritt A die Aktualisierung der Gelände-Datenbasis aufgrund wenigstens bestimmter gespeicherter Unterschiede umfaßt.

27. Vorrichtung nach einem der Ansprüche 24 bis 26, dadurch gekennzeichnet, daß das Netzwerk des Schritts B1 außer den Basis-Maschen Zwischenmaschen aufweist, die bestimmte Basis-Maschen unterteilen, und Endmaschen, die ihrerseits bestimmte Zwischenmaschen unterteilen, wobei besagte Zwischen- und Endmaschen wenigstens in der Nähe von Flughafenzonen vorgesehen sind.

28. Vorrichtung nach einem der Ansprüche 24 bis 27, dadurch gekennzeichnet, daß in Schritt B.1 die Maschen zu Blöcken zusammengefaßt werden, wobei jeder Block einer als Absolutwert ausgedrückten Höhenbezugsgröße zugeordnet ist, während die maximale Höhe in jeder Masche als relativer Wert ausgedrückt wird, bezogen auf eine benachbarte Masche, entsprechend einem festgelegten Gesetz des Durchlaufens der Maschen im Innern eines Blocks, und dadurch, daß ein schneller Arbeitsspeicher vorgesehen ist, wo die relativen Höhen umgewandelt werden in absolute Höhen.

29. Vorrichtung nach einem der Ansprüche 24 bis 28, dadurch gekennzeichnet, daß der Schritt B.2 die Freigabe bzw. Bestätigung von Positionsdaten eines Funknavigationsinstruments (21) bezüglich derjenigen eines Trägheitsnavigations-Leitwerks (20) umfaßt, wobei die einmal freigegebenen Daten (L,G) den Schritten B.3 und B.4 dienen.

30. Vorrichtung nach einem der Ansprüche 24 bis 29, dadurch gekennzeichnet, daß es außerdem, im Alarmfall, entsprechend einem Gelände-Ausweichgesetz, die Erstellung eines Ausweichbefehls umfaßt.

## Claims

1. Air navigation aid device, of the type comprising:

   - a mass memory (30) able to store altitude threshold data, each altitude threshold being addressable via two horizontal coordinates,
   - inputs for receiving status information (L,G,Z) representing the measured position and the motion of the aircraft,

- a work memory (40),
- mass memory management means (35) for storing in the work memory (40) the altitude threshold corresponding to the present position of the aircraft,
- means for monitoring a chosen condition, pertaining to the relation between the measured altitude (Z) and the altitude threshold of the work memory, so as to establish an action such as an alarm when this condition implies passage beneath a safety altitude, characterised in that the mass memory is organised as an altimetric database, covering a substantial part of the terrestrial surface with an index allowing rapid access to contiguous grid cell sets contained in the said database, as a function of the two horizontal coordinates, in accordance with at least one level of resolution,

in that, for each grid cell, the altitude threshold is a direct representation of the maximum altitude of the ground inside this grid cell,
in that- the work memory (40) is a fast memory, of a size able to receive a temporary local map defining an altitude envelope in the zone in which the aircraft is travelling,
in that the device comprises:

- status information processing means (2; 28) for defining predicted altitudes in conjunction with predicted positions of the aircraft, and
- anti-collision processing means (4; 43, 46) for:

  - defining (43) a region of protection around the aircraft, in conjunction with a series of predicted positions of the aircraft, and
  - comparing this region of protection with the altitude envelope in the corresponding part of the said local map,

an alarm (51) being established if the relation between the region of protection and the altitude envelope satisfies an anti-collision condition implying a crossing, in the downwards direction, of an altitude safety margin.

2. Device according to Claim 1, characterised in that it includes validation means (7) for comparing, over the actual path of the aircraft, the terrain defined by the fast memory with the terrain defined by the on-board instruments, and means formulating a signal (VAL.NAV.) for validation of the anti-collision processing means (4) on the basis of the comparison made by the validation means.

3. Device according to Claim 2, characterised in that the validation means (7) comprise a memory (70) relating to the terrain overflown according to the file, a memory (71) relating to the terrain overflown according to the on-board instruments, means (72) for establishing at least one magnitude representing the deviation between these two memories, and means (74, 75) for comparing this magnitude of deviation with a threshold.

4. Device according to Claim 3, characterised in that it comprises means of analysis (77) for controlling display (57) of the comparison between the two overflown-terrain memories.

5. Device according to one of Claims 2 to 4, characterised in that the validation means (7) include means (79) for storing at least some of the logged deviations.

6. Device according to one of Claims 2 to 5, characterised in that the said memories (70, 71) work on the height of the ground, the second memory (71) receiving the altitude (ZA) and a height of the aircraft above the ground (HRS).

7. Device according to one of Claims 1 to 6, characterised in that the grid comprises basic grid cells some of which are subdivided by at least one finer-resolution grid level, particularly in the vicinity of airports.

8. Device according to one of Claims 1 to 7, characterised in that the mass memory is structured in units, each unit being associated with a reference altitude datum expressed as an absolute value, whilst the maximum altitude in each grid cell of the unit is expressed as a relative value, with respect to a neighbouring grid cell, in accordance with a predetermined law of traversal of the grid cells inside a unit; and in that the mass memory management means (35) are configured to convert the relative altitudes into absolute altitudes as they are loaded into the work memory.

9. Device according to Claim 8, characterised in that each unit possesses an overlap of at least one basic grid cell on two adjacent sides with its neighbours, the memory management means (35) being capable of verifying the consistency of the relative altitude data between different units, owing to their overlap.

10. Device according to one of Claims 1 to 9, characterised in that it includes means (25) for validating the position data for a radionavigation instrument (21) with respect to those of an on-board inertial instrument (20), the data (L, G) thus validated serving in the prediction (28) of the path of the aircraft and in the addressing of the fast memory (40).

11. Device according to one of Claims 1 to 10, characterised in that the said inputs also receive control indications which include the definition of an altitude safety margin (MZC), and in that the said first condition relates to the fact that the vertical distance between the region of protection and the said altitude envelope is less than this altitude safety margin.

12. Device according to one of Claims 1 to 11, characterised in that the anti-collision processing means are also configured to emit a pre-alarm indicating a medium-term danger of collision with the ground, as a function of a second anti-collision condition.

13. Device according to one of Claims 1 to 12, characterised in that it includes means capable, in the event of an alarm, of establishing a desirable piloting command, as a function of a terrain avoidance law, specific to the aircraft.

14. Device according to Claim 13, characterised in that the avoidance law takes account of angles of attitude of the aircraft, in particular of whether the aircraft is flying in a straight line or is turning.

15. Device according to Claim 14, characterised in that the angles of attitude are derived from the inertial guidance module.

16. Device according to one of Claims 1 to 15, characterised in that the first anti-collision condition comprises the consideration of a path of nose-up piloting of near-maximum amplitude after a short delay.

17. Device according to Claim 16, taken in combination with Claim 12, characterised in that the second anti-collision condition comprises the consideration of another path, of nose-up piloting of at most as pronounced an amplitude as that of the first path, after a longer delay.

18. Device according to one of Claims 1 to 17, characterised in that the means of managing the database use a change of reference frame in the zones surrounding the terrestri 1 poles.

19. Device according to one of Claims 1 to 18, characterised in that it includes means (60) for displaying an artificial image of the terrain, as a function of the contents of the fast memory.

20. Device according to one of the preceding claims, characterised in that the status indications come from at least one sensor chosen from the group comprising: at least one on-board inertial guidance module, a radionavigation instrument, in particular a satellite-based instrument, a radio altimeter, a barometric altimeter, an instrument landing system.

21. Device according to one of the preceding claims, characterised in that the status information processing means (2; 28) and the anti-collision processing means (4; 43, 46) operate at a rate of renewal of the order of one hertz.

22. Device according to one of the preceding claims, characterised in that the inputs also receive one at least of the following information items: automatic or manual piloting, aircraft turning or flying straight, flight characteristics of the aircraft.

23. Device according to one of the preceding claims, characterised in that it is capable of at least partially modified operation in the vicinity of the ground, in particular in the instrument landing phase.

24. Air navigation aid method employing a device fitted onboard an aircraft, of the type including:

- a mass memory (30) able to store altitude threshold data, each altitude threshold being addressable via two horizontal coordinates,

- inputs for receiving status information (L,G,Z) coming from on-board instruments and representing the measured position and the motion of the aircraft,
- a work memory (40),
- mass memory management means (35) for storing in the work memory (40) the altitude threshold corresponding to the present position of the aircraft,
- means for monitoring a chosen condition, pertaining to the relation between the measured altitude (Z) and the altitude threshold of the work memory, so as to establish an action such as an alarm when this condition implies passage beneath a safety altitude,

characterised in that it includes the following steps:

A - on the ground, maintaining a terrain database representing at least a substantial part of the terrestrial globe,
B - aboard the aircraft,

B.1 - providing a mass memory able to store a database extracted from the ground database, and representing at least a substantial part of the terrestrial globe, in the form of a partition comprising a grid over at least one level of resolution, each grid cell being associated with data representing the maximum altitude inside the grid cell, and an index allowing rapid access to contiguous grid cell sets contained in the said database, as a function of an addressing with horizontal position coordinates,
B.2 - receiving from the on-board instruments, on the inputs, two horizontal components of the position of the aircraft, an item of vertical information, and the velocity vector of the aircraft,
B.3 - as a function of two horizontal components of the position of the aircraft, loading into a fast work memory a temporary local map defining an absolute altitude envelope of the terrain, in the zone in which the aircraft is travelling,
B.4 - as a function of the position, and of the velocity vector of the aircraft, estimating a plurality of points of the predicted path of the aircraft,
B.5 - at each predicted point, comparing the contour of a region of protection around the aircraft, with the altitude envelope in the corresponding part of the said local map, and
B.6 - raising an alarm if the relation between the region of protection and the altitude envelope satisfies an anti-collision condition, this condition representing the crossing, in the downwards direction, of an altitude safety margin.

25. Method according to Claim 24, characterised in that it furthermore comprises a validation step (7) for comparing, over the actual path of the aircraft, the terrain defined by the fast memory with the terrain defined by the on-board instruments.

26. Method according to Claim 25, characterised in that the validation comprises the storage of deviations, and in that the step A comprises the updating of the ground database from at least some of the stored deviations.

27. Method according to one of Claims 24 to 26, characterised in that the grid of step B1 comprises, apart from the basic grid cells, intermediate grid cells subdividing some of the basic grid cells, and final grid cells in turn subdividing some of the intermediate grid cells, the said intermediate and final grid cells being provided at least in the vicinity of airport zones.

28. Method according to one of Claims 24 to 27, characterised in that in step B.1, the grid cells are grouped together in units or blocks, each unit being associated with a reference altitude datum expressed as an absolute value, whilst the maximum altitude in each grid cell is expressed as a relative value, with respect to a neighbouring grid cell, in accordance with a predetermined law of traversal of the grid cells inside a unit; and in that there is provided a fast work memory in which the relative altitudes are converted into absolute altitudes.

29. Method according to one of Claims 24 to 28, characterised in that step B.2 includes the validation of position data for a radionavigation instrument (21) with respect to those of an on-board inertial instrument (20), the data (L, G) thus validated serving in steps B.3 and B.4.

30. Method according to one of Claims 24 to 29, characterised in that it furthermore comprises, in the event of an alarm, the establishment of an avoidance command, as a function of a terrain avoidance law, specific to the aircraft.

FIG.1

FIG. 2

**21** — GPS — Antenne GPS

**22** — Radio-altimètre — Antenne RA

**20** — INU

**25** — Validation

$L_1, G_1, Z_1$

$L_\emptyset, G_\emptyset, Z_\emptyset$

HRS

$\vec{v}$

$\vec{y}$

**28** — Extrapolation

$L_2, G_2, Z_2$
LGZ validité et permanents
par INU($p_2$)

LGZ

**4** — Calculs d'anticollision AGATE

ALARMES

**70** — Profil survolé extrait du Fichier

**71** — Profil réellement survolé

VAL. NAV.

**72-79** — Comparaison des profils

Validation des paramètres de navigation

$p$ = périodicité de renouvellement de l'information
$p_1$ = quelques secondes à quelques minutes
$p_2$ = ordre de la seconde

# FIG. 3

24

Fichier

MDF (79)

**10** Système de Remplissage et Mise à jour

Au sol

**12** Adaptation à un avion donné

Interface de Mise à jour **32**

Base de données (relatif) 5 bits **3**

Gestion de la base de données **35**

Décompression des données **37** **30**

LGZ (6) (7)

Radio-altimètre

HRS

calcul anticollision et évitement

GPS + INU + Extrapolation

Calcul des lois d'Anticollision **43**

altitude

Carte locale Temporaire (double) (absolu) **40** **4** (7) (6)

**2**

En vol

trajectoire

**46** profil

profil

Poste de commande

Analyse de Situation Instantanée et Future

VAL NAV

Calcul des - loi d'évit(Z) - loi d'évit(XYZ) **48**

(6) (7)

**90**

discrets

ordres

**FIG.4A**

Alarme - lumineuse - sonore - vocale **51**

Affichage d'un Directeur d'ordre **53**

FIG. 4 B

FIG. 5

(M1,N1)   altitude $= Z_1$        $\Delta_Z = Z_2 - Z_1$
(M2,N2)   altitude $= Z_2$

FIG. 6

## FIG.7 - PAVÉ MN

## FIG.8

## FIG.9

# FIG. 10 a - $Z_A$ A PARTIR DE SON PAVE

$i \in [I]$
$j \in [J]$

$$Z_A = Z_{11} + \sum_{j=2}^{j_A} \Delta_{1j} + \sum_{i=2}^{i_A} \Delta_{ij_A}$$

# FIG. 10 b - $Z_A$ A PARTIR DE M, N + 1

Pavé M,N+1

M,N+1
$Z_{11}$

$\Delta^{M,N}_{1J}$

$j_A$

A

Pavé M,N

M,N
$Z_{11}$

$i_A$

$$Z_A \;=\; Z_{11}^{M,N+1} \;-\; \sum_{j=j_A+1}^{J} \Delta_{ij}^{MN} \;+\; \sum_{i=2}^{i_A} \Delta_{ij_A}^{MN}$$

FIG.10c - $Z_A$ A PARTIR DE M+1,N

M,N                    M+1,N

$j_A$

A

$\begin{matrix} M,N \\ Z_{11} \end{matrix}$

$i_A$

$\Delta_{I1}^{M,N}$     $Z_{11}^{M+1,N}$

$$Z_A = Z_{11}^{M,N+1} + \sum_{j=2}^{j_A} \Delta_{1j}^{M,N+1} - \sum_{i=i_A+1}^{I} \Delta_{ij_A}^{MN}$$

# FIG. 11

$$Z_{11}^{M,N+1}$$

$$M,N+1$$

$$\Delta_{1J}^{M,N}$$

$$M,N$$

$$Z_{11}^{M,N}$$

- $Z_{11}^{M,N+1} = Z_{11}^{M,N} + \sum_{j=2}^{J} \Delta_{1j}^{M,N}$

- $\forall i \in \{2....1\}$

  $\Delta_{i1}^{M,N+1} = \Delta_{iJ}^{M,N}$

# FIG.12

M,N          M + 1,N

$$Z_{11}^{M,N}$$

$$\Delta_{I1}^{M,N} \qquad Z_{11}^{M+1,N}$$

- $$Z_{11}^{M+1,N} = Z_{11}^{M,N} + \sum_{i=2}^{I} \Delta_{i1}^{M,N}$$

- $$\forall j \in \{2,\ldots,J\}$$

$$\Delta_{1j}^{M+1,N} = \Delta_{Ij}^{M,N}$$

## FIG.13 - MARGES D'INCERTITUDE

## FIG.14 - INCERTITUDE LIÉE A LA TRAJECTOIRE DE L'AERONEF
### ( Projection dans le plan horizontal )

# FIG.15 - PRINCIPE GENERAL DE L'ECHANTILLONNAGE
# FIG.15a - TRAJECTOIRE PREDITE (Plan horizontal)

Trajectoire prédite

Position actuelle Aéronef

# FIG.15b - GABARIT DE SECURITE ECHANTILLONNE SOUS LA TRAJECTOIRE PREDITE

Altitudes profil terrain et marge $M_Z$

$M_Z$

x

p   p

p = pas d'échantillonnage

# FIG.16 - EVOLUTION DE LA POSITION DE L'AERONEF DANS LA MEMOIRE LOCALE

$\vec{v}$ = vecteur vitesse

Carte locale temporaire

## FIG.17a - LOI D'ANTICOLLISION

projection du cercle
d'incertitude

un des points
d'échantillonnage

trajectoire prédite de
l'aeronef

altitude

$Z_{TM}$

$Z_T$

$M_z$

marge $M_z$

distance

c

c : côte de la maille

m

c

c

trajectoire prédite
de l'aéronef

## FIG.17b

R

cercle d'incertitude

surface à tester (hachurée)

FIG.18 - COURBES DE PROTECTION

FIG. 19

EXEMPLE
D'ABSENCE DE
FAUSSE ALARME

FIG. 20

EXEMPLE
D'ALARME
PERTINENTE

FIG. 21 - TRAJECTOIRE D'EVITEMENT (Plan vertical)

$R_T$

$t_0$

$TR_0$(retard)

$t_1$

$R_x$

début du dégagement

$t_2$

$t_3$

courbe de dégagement

$z_T$ (70)

FIG.22A

t

$z_A$

HRS

$z_A$ - HRS

FIG.22B

t

FIG. 23A

FIG. 23 B

7700 — Analyse des anomalies (HRS valide)

7702 — [Δp1] > S1 — non / oui

7704 — [Δp4] > S2 — non / oui

7706 — [Δp2] > S2 — oui / non

A    B    ←Cas→    C    D

7712

7714

7716

7740 — Enregistrement des L,G,Δp pendant toute la durée de l'anomalie

7750 — Enregistrement du L,G du début de l'anomalie

7780 — VAL. NAV. vrai

7785 — VAL. NAV. faux

fin

FIG. 24